# EUROPÄISCHE PATENTSCHRIFT

(11) **EP 4 220 278 B1**
(45) Veröffentlichungstag und Bekanntmachung des Hinweises auf die Patenterteilung: **05.11.2025**
(21) Anmeldenummer: 23166099.4
(22) Anmeldetag: 14.09.2018
(51) Int. Cl.: G02B 27/00, B08B 3/12, B60S 1/56, B08B 7/02, B08B 17/02

(54) **OPTISCHE ÜBERWACHUNGSVORRICHTUNG**
OPTICAL MONITORING DEVICE
DISPOSITIF DE SURVEILLANCE OPTIQUE

(30) Priorität: 24.11.2017 DE 102017127855
(43) Veröffentlichungstag der Anmeldung: 02.08.2023
(62) Teilanmeldung aus: 18778396.4
(73) Patentinhaber: ECHOVISTA ULTRASOUND SURFACE CLEANING LTD, Romsey, Hamshire SO51 9AW (GB)
(72) Erfinder: Najorka, Lars, 63225 Langen (DE); Walter, Steffen, 63110 Rodgau (DE); Johannessen, Ole Gustav, Southhampton, SO19 4EA (GB); Matthews, Oliver Simon, Southhampton, SO40 2RB (GB); Shin, Mincheol, Eastleigh, SO53 1FQ (GB)
(74) Vertreter: Herrmann, Daniel

(56) Entgegenhaltungen:
- EP-A1- 2 115 865
- WO-A1-2017/022382
- DE-A1- 102015 121 026
- DE-A1- 4 217 559
- US-A1- 2012 243 093
- US-A1- 2014 036 084
- US-A1- 2015 089 754

## Beschreibung

Die Erfindung betrifft gemäß dem Oberbegriff von Anspruch 1 ein optisches Überwachungssystem mit einer optischen Überwachungsvorrichtung, deren Sicht- oder Scanfeld durch eine Linse erfasst ist, und einer Schutzscheibe, die die Linse vor Niederschlag schützt und wenigstens das Sicht- oder Scanfeld der Überwachungsvorrichtung abdeckt.

Optische Überwachungsvorrichtungen haben sehr vielseitige Einsatzgebiete. Sie können zum einen als stationäre Kameras ausgebildet und eingesetzt werden, beispielsweise im Rahmen der Objektüberwachung oder als Sicherheitskameras im öffentlichen Raum, oder als Kameras in Fahrzeugen, deren Bild- und/oder Datensignale dem Fahrer zur Unterstützung dienen oder von einem Steuerungssystem zum autonomen Bewegen des Fahrzeuges, das ebenfalls Gegenstand der vorliegenden Erfindung ist, ausgewertet und in Steuerungsbefehle für das Fahrzeug umgesetzt werden. Unter Fahrzeugen sind hier Land-, Wasser- und Luftfahrzeuge zu verstehen, wobei das autonome Fahren von Kraftfahrzeugen aktuell eine hohe Aufmerksamkeit genießt.

Andere optische Überwachungsvorrichtungen können anstelle einer Kamera einen Laserscanner einen Winkelspiegel (z.B. in der Ausbildung eines Periskops) oder eine sonstige Optik aufweisen, die ein Umgebungsbild auf ein Okular oder ein optisches Signal auf einen Sensor abbildet.

Unabhängig vom Einsatzzweck besteht das Problem, dass zwar eine Schutzscheibe zum Schutz der empfindlichen Linse vorgesehen ist, diese aber selbst durch Niederschlag, worunter neben Regen und Schnee unter anderem auch Kondensatbildung auf der Scheibe verstanden wird, in der Durchsicht beeinträchtigt werden kann. Bei stationären Überwachungsvorrichtungen können ggf. relevante Sicherheitsinformationen nicht oder erst zu spät erfasst werden. Eine nachteilige Rolle spielt Niederschlag auch bei der Überwachung von Arbeitsräumen, z.B. von Werkzeugmaschinen, bei denen ein flüssiges Medium eingesetzt wird, das sich auf der Schutzscheibe niederschlagen kann, oder in feuchten Umgebungen, bei denen mit Kondensatbildung auf der Schutzscheibe zu rechnen ist.

Besonders gravierend ist das Problem bei Überwachungsvorrichtungen in Fahrzeugen, bei denen die Informationen in Echtzeit ausgewertet werden müssen, um eine sichere Steuerung des Fahrzeuges unter allen Umständen zu gewährleisten. Da die Schutzscheiben der Überwachungsvorrichtungen in besonderem Maße Niederschlag, Eis-, Reif- oder Kondensatbildung ausgesetzt sind, ist es unerlässlich, für eine klare Sicht wenigstens im Bereich des Sichtfeldes oder des Scanfeldes der optischen Überwachungsvorrichtung zu sorgen, damit das Steuerungssystem jederzeit auf verlässliche Informationen der Überwachungsvorrichtung zurückgreifen kann.

Im Kraftfahrzeugbereich ist es bekannt, Frontkameras zur Auswertung des Sichtfeldes vor dem Fahrzeug hinter einer Schutzscheibe anzuordnen, beispielsweise hinter einer transparenten Kuppel auf dem Dach, hinter einer der Kamera zugeordneten Schutzscheibe oder hinter der Windschutzscheibe des Fahrzeuges. Hier kann ein herkömmlicher Scheibenwischer auch das Sichtfeld der Kamera mit reinigen, wobei Schwierigkeiten bei partieller Eis- oder Kondensatbildung im Sichtfeld der Kamera auftreten können, die die Fahrzeuginsassen beim Durchblick durch ihr normales Sichtfenster der Windschutzscheibe gar nicht wahrnehmen. Auch bei transparenten, glockenartigen Abdeckungen sind Wisch-/Waschsysteme bekannt, bei denen umlaufende Scheibenwischer die Glocke rundum reinigen, wobei zur Unterstützung Wasser auf die Schutzglocke gesprüht wird, dem Reinigungsmittel zugesetzt sein können. Die gleiche Problematik tritt bei Laserscannern auf, deren Scanfeld ebenfalls durch Schmutz nicht beeinträchtigt werden darf.

DE 10 2015 121026 A1 betrifft eine Ultraschall-Linsensreinigungsvorrichtung.

WO 2017/022382 A1 betrifft eine Vorrichtung zum Entfernen von an einer Linse anhaftenden Wassertröpfchen. EP 2 115 865 A1 betrifft eine Vorrichtung zum Entfernen von Fremdkörper auf einem Objekt mittels zweier piezoelektrischer Elemente unter Ausbildung einer stehenden Welle. US 2015/089754 A1 betrifft ein selbstreinigendes System bestehend aus einem Substrat und einem Ultraschall-Sender als Reiniger, der mit dem Substrat verbunden ist.

US 2014/036084 A1 betrifft eine Fahrzeugkamera mit einem Piezo-Wandler zum Reinigen oder Verdampfen von Wassertröpfchen von der Oberfläche des Kameraobjektivs. US 2012/243093 A1 betrifft eine Linsenreinigungsvorrichtung mit einer schwingenden Anordnung mit einem Gehäuse und einem damit gekoppelten Wandler, der eine im Wesentlichen zylindrische Form aufweist. DE 42 17 559 A1 betrifft eine Vorrichtung zur Sauberhaltung einer exponierten Fläche eines optischen Abbildungssystems oder Radarsystems.

Die Aufgabe der vorliegenden Erfindung besteht darin, eine optische Überwachungsvorrichtung zu schaffen, deren Überwachungsfunktion bei Niederschlag weniger beeinträchtigt ist.

Hauptmerkmale der Erfindung sind im kennzeichnenden Teil von Anspruch 1 angegeben. Ausgestaltungen sind Gegenstand der Ansprüche 2 bis 13.

Erfindungsgemäß ist eine optische Überwachungsvorrichtung der eingangs genannten Art mit der Neuerung vorgesehen, dass die Schutzscheibe mit wenigstens einem Ultraschall-Transducer akustisch gekoppelt ist.

Es hat sich gezeigt, dass sich durch diese Anordnung besonders schnell eine Klarsicht durch die Schutzscheibe hindurch erreichen lässt, da die Ultraschall-Transducer, die auch als Ultraschallsonden bezeichnet werden, effizient auf das Sichtfeld bzw. Scanfeld der Überwachungsvorrichtung auf der Schutzscheibe fokussiert werden können, dessen Größe je nach Brennweite der Kameralinse und Abstand zu der Linse der Optik der Vorrichtung variieren kann. Es ist in jedem Fall kleiner als z.B. das gesamte Sichtfeld einer Windschutzscheibe eines Fahrzeuges, so dass sich die Reinigungswirkung optimieren lässt.

Im Folgenden werden zu reinigende Objekte, wie Scheiben, Verbundglasscheiben, Linsen von optischen Systemen, Schutz- oder Sichtscheiben oder eine sonstige Oberflächen unter dem Begriff Substrat zusammengefasst, wobei hiermit gemeint ist, dass das zu reinigende Element auf seiner Oberfläche einen Transducer trägt, also das Substrat für den Transducer ist.

Der Transducer kann ein einzelnes Element sein oder ein Cluster oder Array von mehreren Elementen aufweisen, die durch ein synchronisiertes Signal steuerbar sind, um gleichmäßige Wellenformen zu erzeugen. Das Array oder Cluster kann ebenfalls mit einem versetzten Signal für jedes Element des Clusters oder Arrays gesteuert werden, um spezielle Wellenformen zu erzeugen. Das Array oder Cluster kann auf dem Substrat in einer einfachen Geometrie, etwa einer Linie oder in einer komplexeren Geometrie, wie etwa einem Polygon, angeordnet sein.

Durch den Transducer sind Raumwellen und/oder Oberflächenwellen erzeugbar. Raumwellen sind beispielsweise Longitudinalwellen oder Transversalwellen. Longitudinalwellen schwingen in deren Ausbreitungsrichtung. Transversalwellen schwingen quer zu deren Ausbreitungsrichtung. Oberflächenwellen entstehen beispielsweise durch Brechung von Raumwellen an Grenzschichten. Die Oberflächenwellen breiten sich senkrecht zu deren Schwingungsrichtung entlang einer Grenzfläche zwischen zwei akustisch unterschiedlichen Medien aus. Beispielsweise schwingen Love-Wellen an der Grenzfläche in horizontaler Richtung und breiten sich senkrecht zu der Schwingungsrichtung aus. Rayleigh-Wellen schwingen, bezogen auf die Grenzfläche in vertikaler Richtung und breiten sich senkrecht zu der Schwingungsrichtung entlang der Grenzfläche aus. Die Oberflächenwellen erfahren in das jeweilig jenseits der Grenzfläche liegende Material eine starke Dämpfung. Die durch den Transducer erzeugten Schallwellen sind bevorzugt Ultraschallwellen. Ultraschall ist der Frequenzbereich, der oberhalb des Hörfrequenzbereichs des Menschen liegt und beginnt bei etwa 16 kHz.

Die Ultraschall-Transducer sind in aller Regel als Piezoelemente ausgebildet, die in der Lage sind, den Ultraschall mit den gewünschten Frequenzen zu erzeugen.

In einer besonders bevorzugten Ausführungsform der Erfindung ist vorgesehen, dass der Frequenzbereich des wenigstens einen Transducers zwischen 0,5 und 5 MHz liegt.

Diese Ausführungsform ermöglicht es, die an der Schutzscheibe haftende Feuchtigkeit nicht nur schneller zu den Rändern des Sichtfeldes zu bewegen, sondern auch unmittelbar durch den möglichen hohen Energieeintrag verdampfen zu lassen.

Nach einer weiteren Ausführungsform ist vorgesehen, dass der Transducer ein piezoelektrisches Material insbesondere Bleizirkonattitanat (PZT) aufweist. Hierdurch ergibt sich der Vorteil, dass so ein Transducer herstellbar ist, der eine hohe Frequenz- und Leistungseffizienz aufweist.

Entsprechend einer Weiterbildung ist optional vorgesehen, dass der Transducer auf einer dem Substrat bzw. der Schutzscheibe zugewandten Seite mindestens eine Elektrode aufweist. Auf diese Weise ist die Energie der Ultraschall-Wellen, die durch den Transducer ausgesendet werden, vorteilhaft in das Substrat einkoppelbar. Durch eine vorzugsweise Ausgestaltung, wonach eine die Elektroden in unmittelbarer Nähe zu der Oberfläche des Substrats ausgebildet sind lassen sich in vorteilhafter Weise bestimmte Wellentypen, beispielsweise Oberflächenwellen oder Raumwellen, erzeugen.

Gemäß einer weiteren Ausgestaltung ist gegeben, dass der Transducer mindestens eine Elektrodengruppe mit jeweils mindestens einer Elektrode hat. In einer weiteren Ausgestaltung hat der Transducer mindestens zwei Elektrodengruppen mit jeweils mindestens zwei Elektroden. In einer weiteren Ausgestaltung hat der Transducer mindestens drei Elektrodengruppen mit jeweils mindestens zwei Elektroden. Durch das Gruppieren von Elektroden zu Elektrodengruppen lassen sich Elektroden gemeinsam ansteuern. Hierdurch wird der Aufwand bei der Integration des Transducers verringert. Sofern optional auf dem Transducer selbst Verbindungen von Elektroden zu Elektrodengruppen vorgesehen sind, ergibt sich der weitere Vorteil, dass separate Zuleitungen für die Ansteuerung des Transducers nur für die Elektrodengruppen und nicht für die einzelnen Elektroden nötig sind.

Eine Weiterbildung sieht optional vor, dass der Transducer eine erste Elektrodengruppe und eine zweite Elektrodengruppe aufweist, wobei die erste Elektrodengruppe mindestens zwei Elektroden mit einem ersten Abstand und die zweite Elektrodengruppe mindestens zwei Elektroden mit einem zweiten Abstand aufweist. Dadurch, dass zwei Elektrodengruppen mit jeweiligen Elektrodenabständen vorgesehen sind, ergibt sich der Vorteil, dass mit einem Transducer unterschiedliche Frequenzen in das Substrat bzw. in die Schutzscheibe, einkoppelbar sind.

Ausgestaltend kann vorgesehen sein, dass die ersten Elektroden der ersten Elektrodengruppe bezogen auf die Dimension des Transducers eine erste Abmessung aufweisen und die zweiten Elektroden der zweiten Elektrodengruppe bezogen auf die Dimension des Transducers eine zweite Abmessung aufweisen, wobei die erste Abmessung von der zweiten Abmessung abweicht. Die Elektroden, die optional als Ausformungen des Transducermaterials ausgebildet sein können, können als Abmessung eine Längenabmessung und eine Breitenabmessung aufweisen. Zudem können die Elektroden eine Erhebung gegenüber dem Transducermaterial aufweisen. Hierdurch ergibt sich der Vorteil, dass die Elektroden in Hinblick auf die durch die Elektroden, bzw. die Elektrodengruppen zu erzeugenden Frequenzen auslegbar sind. Wenn für eine erste Elektrodengruppe eine erste Abmessung der Elektroden gewählt wird, die sich von der zweiten Abmessung der zweiten Elektroden der zweiten Elektrodengruppe unterscheidet, dann sind in vorteilhafter Weise mit den Elektrodengruppen unterschiedliche Frequenzen erzeugbar. Hierdurch ergibt sich der weitere Vorteil, dass beispielsweise eine erste Frequenz und eine zweite Frequenz mit nur einem Transducer erzeugbar sind, wobei sich die erste Frequenz von der zweiten Frequenz in einer weiterhin vorteilhaften Weise unterscheidet, insbesondere höher als die zweite Frequenz ist. Dies kann insbesondere dann von Vorteil sein, wenn auf dem Substrat unterschiedliche Niederschläge oder Verunreinigungen vorhanden sind, die sich mittels unterschiedlicher Frequenzen der in das Substrat durch den Transducer eingekoppelten Schallwellen entweder bewegen oder vaporisieren lassen.

Gemäß einer Weiterbildung ist vorgesehen, dass die erste Elektrodengruppe mit der zweiten Elektrodengruppe kammartig verzahnt ist. Insbesondere ist hierdurch ein Inter-Digital Transducer gegeben. Aus der kammartigen Verzahnung ergibt sich der Vorteil, dass durch den Transducer besonders effektiv Oberflächenwellen erzeugbar sind.

Nach einer Ausgestaltung ist optional vorgesehen, dass die erste Elektrodengruppe in einem ersten Bereich des Transducers angeordnet ist und, dass die zweite Elektrodengruppe in einem zweiten Bereich des Transducers angeordnet ist. So können vorteilhaft eventuell auftretende Interferenzen in den erzeugten Wellen abgeschwächt oder vermieden werden. In einer besonderen Ausgestaltung ist daher vorgesehen, dass der erste Bereich und der zweite Bereich nicht in Überdeckung sind. Als Bereich muss insbesondere nicht ein zusammenhängender Bereich verstanden werden. Als Bereich wird vielmehr eine Fläche aufgefasst, die durch eine oder mehrere Elektrodengruppen mit gleichen Eigenschaften abgedeckt ist. Hierbei kann es also beispielsweise sein, dass in einer Längsrichtung eines Transducers wechselweise ein erster Bereich und ein zweiter Bereich angeordnet sind.

Die Erfindung kann dadurch weitergebildet sein, dass der Transducer eine rechteckige Form aufweist. Alternativ zu einer rechteckigen Form kann der Transducer eine L-Form aufweisen. Eine weitere Alternative besteht darin, dass der Transducer eine U-Form aufweist. Schließlich kann es hinsichtlich der Ausgestaltung der Form des Transducers vorteilhaft sein, wenn der Transducer kreisförmig ist. Je nach Anwendungsfall kann eine bestimmte Transducerform vorteilhaft sein. Die rechteckige oder kreisförmige Ausgestaltung des Transducers ist insbesondere dann vorteilhaft, wenn die Sichtfläche des Substrats bzw. der Schutzscheibe nicht wesentlich beeinträchtigt werden soll. Sofern der Niederschlag nicht nur vaporisiert, sondern auch bewegt werden soll, könnte es sich als vorteilhaft erweisen, den Transducer in einer L- oder U-Form auszugestalten. Auf diese Weise wäre der Niederschlag oder die Verunreinigung in eine Vorzugsrichtung, die insbesondere dorthin erstreckt, wo kein Transducermaterial auf dem Substrat bzw. der Schutzscheibe angeordnet ist, erstreckt.

Es ist vorteilhaft, dass der wenigstens eine Transducer neben dem Sichtfeld oder Scanfeld angeordnet ist, um das Sichtfeld bzw. Scanfeld der Überwachungsvorrichtung nicht einzuschränken. Insbesondere bei der Anordnung von mehreren Überwachungsvorrichtungen, die auch eine Kombination von Scannern und Kameras sein können, muss dies aber nicht immer der Fall sein.

In einer weiteren bevorzugten Ausführungsform der Erfindung ist vorgesehen, dass wenigstens zwei Transducer um das Sicht- oder Scanfeld herum angeordnet sind, wobei es weiterhin sinnvoll sein kann, dass drei oder mehr Transducer um den Rand des Sicht- oder Scanfeldes verteilt angeordnet sind.

Mittels diese Maßnahmen ist es möglich, die Verteilung der Ultraschallwellen in der Schutzscheibe, insbesondere im Sicht- oder Scanbereich gezielt zu beeinflussen, um eine homogene Reinigung der Schutzscheibe im Sichtfeld oder Scanfeld der Überwachungsvorrichtung zu erreichen.

Neben der Zahl und Lage der Transducer an der Schutzscheibe besteht eine weitere Option zur Beeinflussung der Verteilung der Ultraschallwellen darin, dass wenigstens zwei Transducer versetzt zueinander angeordnet sind, die gleiche oder unterschiedliche Ultraschallfrequenzen und/oder gleiche oder unterschiedliche Ultraschall-Wellenformen in die Schutzscheibe einstrahlen. Die mindestens zwei Transducer können daher bei gleicher Frequenz oder gleicher Wellenform betrieben werden. Darüber hinaus sind Unterschiede von einigen wenigen Hz zulässig, um Ausrichtungsunterschiede auszugleichen und daher unterschiedlichen Resonanzfrequenzen des Transducer-Substrat-Systems, die durch die Ausrichtungsunterschiede entstehen, begegnen zu können. Zudem können die gleichen oder unterschiedlichen Ultraschallfrequenzen stationäre Frequenzen oder Frequenz-Sweeps sein. Dies hat den Vorteil, dass eine Bandbreite von verschiedenen Verunreinigungen durch ein einziges Transducer-Setup agitierbar ist.

Erfindungsgemäß ist weiterhin vorgesehen, dass ein Randabstand des Ultraschall-Transducers in Abhängigkeit von dessen Arbeitsfrequenzbereich derart gewählt ist, dass bei an einem Rand des Substrats reflektierten Oberflächenwellen konstruktive Interferenz auftritt.

Erfindungsgemäß ist weiterhin vorgesehen, dass ein Arbeitsfrequenzbereich des Ultraschall-Transducers in Abhängigkeit von dessen Randabstand derart gewählt ist, dass zwischen den vom Ultraschall-Transducer ausgesendeten und den am Rand des Substrats reflektieren Oberflächenwellen konstruktive Interferenz auftritt.

Optional ist gegeben, dass ein Arbeitsfrequenzbereich des Transducers in Abhängigkeit von der Mächtigkeit des Substrats derart gewählt ist, dass für innerhalb des Substrats an dessen Rändern oder Grenzflächen reflektierte Raumwellen konstruktive Interferenz auftritt.

Ausgestaltend kann vorgesehen sein, dass die Substratmächtigkeit in Abhängigkeit von dem Arbeitsfrequenzbereich des Transducers derart gewählt ist, dass für innerhalb des Substrats an dessen Rändern oder Grenzflächen reflektierte Raumwellen konstruktive Interferenz auftritt.

Es ist also optional vorgesehen, dass ein Randabstand des mindestens einen Transducers einem Bruchteil oder Vielfachen der Wellenlänge der durch den mindestens einen Transducer erzeugten Schallwellen entspricht.

Durch diese Weiterbildungen hinsichtlich der Ausnutzung einer konstruktiven Interferenz kann die Wellenenergie, die noch nicht in den Niederschlag zu dessen Vaporisation oder Bewegung übergegangen ist, sondern an der Grenze des Substrats, bzw. der Schutzscheibe reflektiert wurde, vorteilhaft weiter genutzt werden, ohne, dass eine Auslöschung durch noch nicht reflektierte Schwingungen auftritt.

Nach einer Weiterbildung kann vorgesehen sein, dass der Transducer in einem Zwischenraum zwischen zwei Substraten angeordnet ist.

Auch ist optional vorgesehen, dass der Transducer auf einer dem Niederschlag abgewandten Seite des Substrats angeordnet ist.

Durch diese vorteilhaften Ausgestaltungen ist sichergestellt, dass der Transducer nicht mit dem Niederschlag in Berührung kommt. Hieraus ergibt sich weiterhin vorteilhaft, dass bei einer solchen Ausgestaltung die Anforderungen an die Abdichtung und den Schutz des Transducers selbst vor dem Niederschlag geringer sind bzw. überhaupt nicht bestehen.

Es kann in einer optionalen Weiterbildung ebenfalls günstig sein, dass der Transducer auf einer dem Niederschlag zugewandten Seite des Substrats angeordnet ist.

Gemäß einer Weiterbildung der Erfindung ist vorgesehen, dass der Transducer innerhalb eines Substrats angeordnet ist.

In einer Ausgestaltung der Erfindung kann vorgesehen sein, dass der Transducer innerhalb einer Schicht eines mehrlagigen Substrats angeordnet ist.

Durch diese Ausgestaltungen ergibt sich der Vorteil, dass durch den Transducer in das Substrat bzw. in die Schutzscheibe direkt Oberflächenwellen einkoppelbar sind, die sich auf der zu reinigenden Oberfläche des Substrats bzw. der Schutzscheibe ausbreiten. Somit werden etwaige Streuungen und Verluste etwa durch Dispersion in dem Inneren des Substrats vermieden.

Eine Weiterbildung sieht vor, dass das Substrat eine Mächtigkeitsaussparung aufweist, in der der Transducer zumindest teilweise einliegt. Somit wird in vorteilhafter Weise eine geringe Bauhöhe erreicht.

Gemäß einer Ausgestaltung ist es optional möglich, dass mindestens zwei Transducer zu jeweils mindestens einer Transducergruppe gruppiert sind.

Die Erfindung kann dadurch weitergebildet werden, dass die Transducer der mindestens einen Transducergruppe miteinander korrespondieren, indem sie gemeinsam angesteuert sind und/oder in einer korrespondierenden Geometrie, etwa beabstandet, aber im Wesentlichen zentriert zueinander ausgerichtet sind.

Durch das Vorsehen einer Transducergruppe aus mindestens zwei Transducern können diese wechselwirken, sodass beispielsweise konstruktive Interferenzen oder stehende Wellen zwischen zwei beabstandeten Transducern einer Transducergruppe erzeugbar sind.

Entsprechend einer Weiterbildung ergibt sich optional, dass mindestens zwei Transducergruppen ansteuerbar sind. Optional ist vorgesehen, dass die mindestens zwei Transducer identisch ausgebildet sind. In einer weiteren Ausgestaltung ist vorgesehen, dass mindestens zwei, drei oder Vier Transducergruppen derart angeordnet sind, dass die Transducer eine ringförmige Struktur ausbilden, also entlang einer ringförmigen Struktur in Umfangsrichtung angeordnet sind.

Dies ist vorteilhaft, da so eine flächenhafte, netzartige Struktur von stehenden Wellen erzeugbar ist, die durch die Modulation der von den Transducern ausgesendeten Schallwellen modifizierbar ist.

Eine weitere Maßnahme zur gezielten Beeinflussung der Amplituden der Ultraschallwellen in der Schutzscheibe kann darin bestehen, dass die Schutzscheibe innere Strukturen zur Umlenkung und/oder Dämpfung der eingeleiteten Ultraschallwellen aufweist. Diese Strukturen können Aussparungen, Grenzflächen oder Füllungen aus stärker oder weniger stark dämpfenden Materialien sein.

Auch wenn es grundsätzlich technisch möglich ist, den wenigstens einen Transducer auf der Oberfläche an die Schutzscheibe zu koppeln, die vor Nässe und Feuchtigkeit geschützt werden soll, ist es bevorzugt, dass der wenigstens eine Transducer von der Seite der Optik der Überwachungsvorrichtung her mit der dortigen Oberfläche der Schutzscheibe verbunden ist. Dort ist er vor Sonneneinstrahlung und Nässe besser geschützt und auch die elektrische Anbindung stellt sich einfacher dar.

Nach einer weiteren Ausgestaltung kann vorgesehen sein, dass der mindestens eine Transducer in einem ersten Modus mit einem frequenzmodulierten Signal angesteuert wird. Optional kann das frequenzmodulierte Signal eine zeitlich variable Modulation (Sweep) aufweisen. Durch die Frequenzmodulation können Ungenauigkeiten in der Anordnung der einzelnen akustisch an dem Reinigungsvorgang beteiligten Komponenten (beispielsweise der Transducer, das Substrat bzw. die Schutzscheibe, eine etwaige Verbindungsschicht, Verkabelungen, etc.) und der Ausgestaltung der einzelnen Komponenten ausgeglichen werden.

Optional kann die Erfindung dadurch weitergebildet sein, dass der Transducer in einem zweiten Modus mit einem amplitudenmodulierten Signal angesteuert wird. Weiterbildend kann das amplitudenmodulierte Signal eine zeitlich variable Modulation (Sweep) aufweisen. Durch die Amplitudenmodulation wird die Front der maximalen Wellenenergie räumlich versetzt, wodurch vorteilhaft die Reinigungsleistung des Systems gesteigert wird.

In einer weiteren Ausgestaltung kann sich optional ergeben, dass der Transducer in einem dritten Modus mit einem phasenmodulierten Signal angesteuert wird. Weiterbildend kann das phasenmodulierte Signal eine zeitlich variable Modulation (Sweep) aufweisen. Durch die Phasenmodulation werden in vorteilhafter Weise Wellenmaxima von stehenden Wellen, die sich zwischen zwei Transducergruppen ausbilden, in einer zwischen den Transducergruppen ausgebildeten Richtung hin- und herbewegt.

Nach einer Weiterbildung kann vorgesehen sein, dass der Modus sequenziell wechselbar ist. Auf diese Weise ist es vorteilhaft möglich, dass das System auf verschiedene Arten von Verunreinigungen anpassbar ist.

In einer Ausgestaltung ist vorgesehen, dass ein Ansteuerungsschaltkreis einen Linearverstärker aufweist. Die Erfindung kann dadurch weitergebildet sein, dass ein Eingangssignal für den Linearverstärker ein Summensignal aus Einzelsignalen unterschiedlicher Frequenzen ist. Einer Ausgestaltung entsprechend ist vorgesehen, dass dem Linearverstärker mindestens ein Frequenzfilter nachgeschaltet ist. Eine Weiterbildung sieht vor, dass mindestens ein Transducer eine Elektrodenkonfiguration aufweist, die frequenzabhängig anregbar ist.

Aus den vorstehenden Ausgestaltungen ergibt sich der Vorteil, dass nur ein Verstärker für die Ansteuerung von verschiedenen Transducern mit unterschiedlichen Frequenzbereichen benötigt wird. Das Gesamtsystem wird dadurch kompakter und effizienter.

Gemäß einer Ausgestaltung ergibt sich optional, dass der Ansteuerungsschaltkreis einen nichtlinearen Verstärker aufweist. Dies gestaltet sich dadurch vorteilhaft, dass ein nichtlinearer Verstärker Oberschwingungen erzeugt. Diese Oberschwingungen können, neben dem Trägersignal für die Ansteuerung eines weiteren Transducers oder einer weiteren Elektrodengruppe desselben Transducers genutzt werden, ohne, dass weitere Hardware nötig ist. Hierdurch wird der Aufbau der Vorrichtung vereinfacht und die Herstellung erleichtert.

Nach einer weiteren Ausgestaltung ist vorgesehen, dass die Vorrichtung ein Temperaturmanagementsystem aufweist. Nach einer Weiterbildung kann sich ergeben, dass das Temperaturmanagementsystem die Temperatur der Vorrichtung, insbesondere des Transducers und/oder des Substrats überwacht. Gemäß einer Ausgestaltung ergibt sich optional, dass das Temperaturmanagementsystem die Leistungsaufnahme des Transducers in Abhängigkeit von der Temperatur regelt. Nach einer Ausgestaltung kann sich ergeben, dass das Temperaturmanagementsystem einen temperaturabhängigen Schaltkreisunterbrecher aufweist. Optional ist weiterbildend vorgesehen, dass der Schaltkreisunterbrecher zurücksetzbar ist.

Das Temperaturmanagementsystem nach den vorstehenden Ausgestaltungen hat den Vorteil, dass die Überhitzung von einzelnen Bauteile der Vorrichtung erkennbar und vermeidbar ist. Auf diese Weise wird eine Beschädigung oder eine funktionelle Beeinträchtigung der Bauteile - beispielsweise durch eine erhöhte Energiezufuhr - vermieden. Beispielsweise kann für das Transducermaterial, eine etwaig vorhandene Verbindungsschicht und/oder das Substrat bzw. die Schutzscheibe selbst ein bestimmter Temperaturbereich vorgesehen sein, innerhalb dessen eine Funktion der Komponente oder bestimmte Eigenschaften gewährleistbar sind.

Gemäß einer Weiterbildung kann vorgesehen sein, dass der Schaltkreisunterbrecher nicht zurücksetzbar ist. Somit wird in vorteilhafter Weise erreicht, dass ein Schaltkreis zur Versorgung des Transducers nicht unbeabsichtigt wieder geschlossen wird und möglicherweise eine Überhitzung des Transducers eintritt.

Eine optionale Ausgestaltung sieht vor, dass der Schaltkreisunterbrecher einen Steuersignalausgang aufweist. Nach einer Weiterbildung kann sich ergeben, dass durch ein Steuersignal des Schaltkreisunterbrechers ein Generator oder Verstärker für das Signal des Transducers ansteuerbar ist. In einer weiteren Ausgestaltung kann vorgesehen sein, dass das Steuersignal an das Temperaturmanagementsystem leitbar ist. Somit ist der Vorteil gegeben, dass die Vorrichtung über das Steuersignal in Abhängigkeit vom Schaltzustand des Schaltkreisunterbrechers schaltbar ist. Auf diese Weise wird sichergestellt, dass eine Temperaturerhöhung über die Schaltschwelle des Schaltkreisunterbrechers auf eine weitere Weise vermieden wird. Dies bringt den Vorteil mit sich, dass die Sicherheit der Vorrichtung weiter erhöht ist.

Ausgestaltend kann vorgesehen sein, dass der Schaltkreisunterbrecher in einem gutem thermischen Kontakt zu dem Transducer und dem Substrat steht.

In einer Weiterbildung der Erfindung ist vorgesehen, dass das Temperaturmanagementsystem einen Temperatursensor aufweist. Die Erfindung kann dadurch ausgestaltet sein, dass der Temperatursensor in gutem thermischen Kontakt zu dem Transducer und dem Substrat steht. Weiterbildend kann vorgesehen sein, dass Sensordaten des Temperatursensors zur Steuerung des Signals für den mindestens einen Transducer verwendbar sind. Die Erfindung kann dadurch weitergebildet sein, dass das Signal für den mindestens einen Transducer in Hinblick auf Amplitude, Frequenz oder Pulsweite in Abhängigkeit von den Sensordaten regelbar ist. Als Temperatursensor kann ein Heißleiter, ein Kaltleiter, ein Thermistor, eine Diode, ein Thermoelement oder ein anderes geeignetes Mittel zur Bestimmung der Temperatur eingesetzt werden.

Aus den obenstehenden Ausgestaltungen der Erfindung mittels eines Temperatursensors ergibt sich der Vorteil, dass sowohl das Überschreiten einer Maximaltemperatur detektierbar ist, als auch der Temperaturverlauf beispielsweise in Abhängigkeit von der dem Transducer zugeführten Leistung feststellbar ist. Somit ist das System vorteilhaft regelbar ohne, dass eine Schaltschwelle nach Erreichen einer Grenztemperatur überschritten wird und das System komplett abschaltet.

Nebenbei ist anzumerken, dass die Transducer hier in an sich bekannter Art und Weise akustisch mit der Schutzscheibe gekoppelt werden, z.B. durch Verkleben mit einem nach dem Aushärten sehr harten Epoxidharz, das eine gute Übertragung und Einleitung des Ultraschalls in die Schutzscheibe ermöglicht.

In einer Weiterbildung der Erfindung ist optional vorgesehen, dass der mindestens eine Transducer mit dem Substrat bzw. der Schutzscheibe durch eine Verbindungsschicht verliersicher verbunden ist, wobei die Verbindungsschicht zwischen dem Substrat bzw. der Schutzscheibe und dem Transducer angeordnet ist und die Verbindungsschicht ein Verbindungsmaterial und ein Füllmaterial aufweist.

Die Verbindungsschicht ist in einer Weiterbildung der Erfindung eine Schicht, die den Transducer mit dem Substrat bzw. der Schutzscheibe stoffschlüssig verbindet. Dies kann optional durch eine Klebeschicht vorgesehen sein. Optional sorgt das Verbindungsmaterial für die Adhäsion des Transducers auf dem Substrat bzw. der Schutzscheibe und weist materialspezifische mechanische und akustische Verbindungsmaterialeigenschaften auf. Optional kann das Füllmaterial ebenfalls zur Adhäsion beitragen aber zudem auch einen Abstand zwischen dem Substrat bzw. der Schutzscheibe und dem Transducer definieren. Das Füllmaterial weist ebenfalls materialspezifische mechanische und akustische Füllmaterialeigenschaften auf. In einer Weiterbildung der Erfindung ist vorgesehen, dass die Verbindungsschicht den Transducer das Substrat bzw. die Schutzscheibe und/oder das Füllmaterial miteinander verbindet, insbesondere stoffschlüssig mitei-nander verbindet, wobei in einer näheren Ausgestaltung der Erfindung vorgesehen ist, dass die Verbindungsschicht im Wesentlichen gasfrei ist.

Durch das Vorsehen einer Verbindungsschicht aus einem Verbindungsmaterial und einem Füllmaterial ergibt sich der Vorteil, dass die Verbindungsschicht durch Auswahl ihrer Materialzusammensetzung sowohl hinsichtlich ihrer mechanischen Eigenschaften, d.h. beispielsweise Dichte, Härte oder Viskosität, als auch hinsichtlich ihrer akustischen Eigenschaften, wie beispielsweise Schallausbreitungsgeschwindigkeit, beeinflussbar ist. Auf diese Weise lassen sich akustische Impedanzunterschiede bzw. akustische Impedanzkontraste zwischen der jeweiligen Feldimpedanz eines Material des Transducers und eines Material des Substrats bzw. der Schutzscheibe einstellen. Dadurch kann in vorteilhafter Weise beeinflusst werden, ob und mit welchem Ausmaß eine Re-flexion der Schallenergie an einer Grenzfläche zwischen dem Transducer und der Verbindungs-schicht und zwischen der Verbindungsschicht und dem Substrat bzw. der Schutzscheibe auftritt. Zudem ist ein weiterer Vorteil dadurch gegeben, dass der Transducer insbesondere durch die Auswahl des Füllmaterials, das der Verbindungsschicht eine mechanische Stabilität verleihen kann, präzise zu dem Substrat ausrichtbar ist. Eine präzise Ausrichtung des Transducers zu dem Substrat bzw. zu der Schutzscheibe hat den Vorteil, dass die durch den Transducer erzeugten Schallwellen optimal in das Substrat bzw. in die Schutzscheibe eingekoppelt werden und sich dort in definierter Art und Weise ausbreiten.

Eine besonders bevorzugte Ausführungsform der Erfindung sieht vor, dass das Füllmaterial einen definierten Abstand zwischen dem Transducer und dem Substrat bzw. der Schutzscheibe herstellt. Der durch das Füllmaterial definierte Abstand ist insbesondere in Hinblick auf die Kopplung des Transducers an das Substrat bzw. die Schutzscheibe sowie für die Ausrichtung des Transducers relativ zu der Oberfläche des Substrats bzw. der Schutzscheibe vorteilhaft.

In einer näheren Ausgestaltung der Erfindung kann vorgesehen sein, dass mindestens ein Formkörper aus dem Füllmaterial eine akustische Brücke durch eine Kopplung mit dem Transducer und dem Substrat bzw. mit der Schutzscheibe bildet. Gemäß einer Weiterbildung der Erfindung ist vorgesehen, dass der mindestens eine Formkörper ein Festkörper, vorzugsweise massiv ist. Die Erfindung kann dadurch weitergebildet sein, dass der mindestens eine Formkörper eine dem Abstand entsprechende Abmessung aufweist. Somit ist in mechanischer Hinsicht ein Abstand zwischen dem Transducer und dem Substrat bzw. der Schutzscheibe durch das Füllmaterial in vorteilhafter Weise fest und eindeutig definiert. Der mindestens eine Formkörper kann eine das Füllmaterial aufweisende Matrix in dem Verbindungsmaterial ausbilden. Durch die akustische Koppelung des Transducers mit dem Substrat bzw. mit der Schutzscheibe über die akustische Brücke des Füllmaterials, also den direkten Materialkontakt des Verbindungsmaterials mit dem Transducer und dem Substrat bzw. der Schutzscheibe ergibt sich der weitere Vorteil, dass u.a. die akustischen Eigenschaften der Verbindungsschicht dadurch beeinflussbar sind. Auf die-se Weise lassen sich die Impedanzkontraste zwischen Transducer und Verbindungsschicht sowie zwischen der Verbindungsschicht und dem Substrat bzw. der Schutzscheibe zusätzlich vorteilhaft beeinflussen.

Eine Weiterbildung der Erfindung sieht vor, dass der mindestens eine Formkörper kugelförmig oder stabförmig ist. Gemäß einer Weiterbildung der Erfindung ist vorgesehen, dass der Durchmesser des mindestens einen kugelförmigen oder stabförmigen Formkörpers einem Bruchteil einer Betriebsfrequenz des Transducers entspricht. Ausgestaltend kann vorgesehen sein, dass der Durchmesser des mindestens einen kugelförmigen oder stabförmigen Formkörpers zwischen 1 und 1000 µm, bevorzugt zwischen 1 und 100 µm und besonders bevorzugt zwischen 30 und 50 µm beträgt. Eine Weiterbildung sieht optional vor, dass der mindestens eine stabförmige Formkörper liegend oder stehend angeordnet ist. Durch die kugel- oder stabförmige Ausgestaltung des mindestens einen Formkörpers ergibt sich in vorteilhafter Weise, dass der oder die Formkörper gut in dem Verbindungsmaterial verteilbar sind und stets in einer definierten Lage in dem Verbindungsmaterial vorliegen, was einen positiven Einfluss auf die Übertragung der Schallwellen von dem Transducer zu dem Substrat bzw. zu der Schutzscheibe hat.

Wie bereits angedeutet, sieht eine besonders bevorzugte Ausführungsform der Erfindung vor, dass die Schutzscheibe in eine Schutzscheibe eines Fahrzeugs integriert oder von der Außenseite auf dieser angeordnet ist. Diese Lösung ist z.B. für Frontkameras in Kraftfahrzeugen ideal, da die bereits bekannten Kamerapositionen im Bereich des herkömmlichen Rückspiegels beibehalten werden können, von wo aus sich ein ideales Sichtfeld für die Kamera ergibt.

Die Integration in die Schutzscheibe kann beispielsweise derart umgesetzt sein, dass die dann als Zusatzschutzscheibe ausgebildete Schutzscheibe die Außenscheibe (äußere Glaslage) einer Verbundglasscheibe bildet. Dennoch liegen die Sensoren vorzugsweise auch dann nicht am Rand der gesamten Schutzscheibe, sondern um den Randbereich des Sichtfeldes der Kamera, das nur einen Bruchteil der Gesamtfläche ausmacht. Bei der Verbundglasscheibe kann es sich um irgendeine Scheibe eines Fahrzeuges, wie z.B. eine Heckscheibe handeln, oder um eine sonstige Sicherheitsscheibe, wie sie z.B. bei Werkzeugmaschinen als Sichtfenster eingesetzt wird. Auch kann die Schutzscheibe alleine zum Schutz einer Kameralinse oder der Optik eines Scanners vorgesehen sind.

In einer besonders zweckmäßigen Ausführungsform der Erfindung ist vorgesehen, dass der wenigstens eine Transducer zwischen den Lagen einer Verbundglasscheibe angeordnet ist. Diese Anordnung benötigt keinen zusätzlichen Raum und insbesondere können die ursprünglichen Abmessungen einer im Prinzip bereits bekannten Schutzscheibe beibehalten werden. Die Transducer werden mit der Außenscheibe der Verbundglasscheibe verklebt, bevor die beiden Lagen mit der zwischenliegenden Laminatlage verbunden werden.

In einer ersten Ausführungsform mit in eine Verbundglasscheibe integrierten Transducern ist vorgesehen, dass der wenigstens eine Transducer in die Laminatlage der Verbundglasscheibe eingebettet ist. Hierbei ergibt sich eine besonders einfache Herstellung bei im Prinzip übernommenen Teilen einer herkömmlichen Verbundglasscheibe.

Aus Gründen der Signaldämpfung kann es von Vorteil sein, wenn die Laminatlage und/oder die Innenscheibe der Verbundglasscheibe im Bereich des Sicht- oder Scanfeldes der Überwachungsvorrichtung und/oder des wenigstens einen Transducers ausgespart ist. Die Aussparung der Laminatlage bedeutet, dass die Transducer und der Bereich des Sicht- oder Scanfeldes nicht durch das Laminatmaterial gedämpft werden, so dass sich ein höherer Wirkungsgrad ergeben kann. Die Transducer liegen hierbei entweder in einem Hohlraum zwischen den beiden Scheiben oder offen, wenn auch die Innenscheibe in diesem Bereich ausgespart ist.

Für den Fall, dass die dann zusätzliche Schutzscheibe nicht integraler Bestandteil einer Schutzscheibe ist, ist es bevorzugt, dass die Zusatzschutzscheibe mit einem Kleber außenseitig, d.h. auf der Seite, auf der der Niederschlag zu erwarten ist, auf dieser wie auch immer beschaffenen Schutzscheibe angebracht ist.

Die außenseitige Anbringung erfolgt vorzugsweise derart, dass zwischen der Zusatzschutzscheibe und der eigentlichen Schutzscheibe ein Hohlraum vorgesehen ist, in welchem der wenigstens eine Transducer angeordnet ist. Der Hohlraum vermeidet Dämpfungseffekte, die die Reinigungswirkung beeinträchtigen könnten.

Je nach Anforderung kann es vorteilhaft sein, dass die Zusatzschutzscheibe in einer Vertiefung oder Ausnehmung der eigentlichen Schutzscheibe angeordnet ist, so dass die Außenseite der Schutzscheibe bündig mit der Außenseite der Zusatzschutzscheibe der Kamera oder sonstigen optischen Vorrichtung abschließt. Eine derartige Anordnung kann z.B. insbesondere dann von Vorteil sein, wenn gemäß einer bevorzugten Weiterbildung der Erfindung ein Scheibenwischer vorgesehen ist, dessen Wischfeld nur das Sicht- oder Scanfeld der Überwachungsvorrichtung, eine Schutzscheibe eines Fahrzeuges einschließlich des Sicht- oder Scanfeldes der Überwachungsvorrichtung oder nur die Schutzscheibe des Fahrzeuges ohne den Sicht- oder Scanbereich der Überwachungsvorrichtung abdeckt.

Der vorzugsweise vorgesehene Scheibenwischer, der einen oder mehrere Wischarme mit Wischblättern haben kann, kann aber auch nur ein Wischfeld abdecken, das sich auf das Sicht- oder Scanfeld der Überwachungsvorrichtung beschränkt oder das Sicht- oder Scanfeld der Überwachungsvorrichtung ausspart.

Das jeweilige Konzept kann vom Einsatzgebiet, von der Art der eingeleiteten Ultraschallwellen und ggf. weiteren Überlegungen abhängen. Ein zusätzlich durch einen Scheibenwischer gereinigtes Sichtfeld bietet unter Umständen bei Verschmutzungen, die kein oder nur wenig Wasser enthalten, eine verbesserte Reinigungswirkung, insbesondere wenn eine Wischwasservorrichtung zum Einsatz kommt. Es kann aber auch bewusst darauf verzichtet werden, das Sicht- oder Scanfeld der Überwachungsvorrichtung auch mit einem Scheibenwischer zu reinigen, z.B. weil das Sicht- oder Scanfeld auch durch die vorbeigleitenden Scheibenwischer wenigstens für einen kurzen Zeitraum verdeckt wird, in welchem keine Signalauswertung erfolgen kann.

Eine weitere besonders vorteilhafte Maßnahme sieht vor, dass die Schutzscheibe aus einem transparenten keramischen Material besteht. Keramisches Material ist in der Regel härter als Glas und bietet besonders günstige Eigenschaften für die Einleitung und Ausbreitung der Ultraschallwellen unter minimaler Dämpfung. Darüber hinaus bietet es unter mechanischer Beanspruchung, z.B. bei Steinschlag bei Fahrzeugen, eine längere Standzeit, da die Oberflächengüte unter den mit hoher Geschwindigkeit auftreffenden Partikeln weniger stark leidet. Diese Ausbildung eignet sich insbesondere für Lösungen, bei denen die zusätzliche Schutzscheibe auf einer vorhandenen Windschutzscheibe oder sonstigen Schutzscheibe partiell im Bereich des Sichtfeldes der Kamera angebracht wird. Die Ausbildung mit einer gesonderten keramischen Schicht ist besonders bevorzugt und kann für alle Arten von Schutzscheiben adaptiert werden, wenn wenigstens im Bereich des Sicht- oder Scanfeldes der Überwachungsvorrichtung eine Keramikschicht vorgesehen ist, unabhängig davon, ob die keramische Schicht Teil der Schutzscheibe ist oder auf diese von außen aufgeklebt wird. Die hohe Beständigkeit des keramischen Materials hat auch den Vorteil, dass beim zusätzlichen Einsatz mechanischer Wischsysteme die Oberfläche weniger verschleißempfindlich ist. Das keramische Material kann auch unmittelbar auf die Oberfläche der Linse aufgebracht sein, die Linse der optischen Überwachungsvorrichtung bildet dann selbst die Schutzscheibe

Gegenstand der vorliegenden Erfindung ist auch ein Steuerungssystem zum autonomen Fahren von Kraftfahrzeugen, bei welchem ein oder mehrere optischen Überwachungssysteme nach einem oder unterschiedlichen Ansprüchen der Ansprüche 1 bis 18 vorgesehen sind.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: einen Querschnitt eines Verbundglases mit darauf angebrachter Zusatzschutzscheibe;
- Fig. 2: eine Schrägansicht auf das Verbundglas nach Fig. 1 mit veranschaulichten Lagen des Verbundglases;
- Fig. 3: eine Draufsicht auf die Zusatzschutzscheibe nach Fig. 1;
- Fig. 4: eine Schrägansicht auf das Verbundglas nach Fig. 1 ohne die Zusatzschutzscheibe;
- Fig. 5: einen Querschnitt eines planen Verbundglases mit darauf angeordneter Zusatzschutzscheibe;
- Fig. 6: eine Schrägansicht auf das Verbundglas nach Fig. 5;
- Fig. 7: einen Querschnitt einer weiteren Ausführungsform mit einem im Bereich von Transducern vorgesehenen Hohlraum eines Verbundglases;
- Fig. 8: eine Schrägansicht auf das Verbundglas nach Fig. 7;
- Fig. 9: einen Querschnitt eines weiteren Verbundglases mit zwischen den Scheiben integrierten Transducern;
- Fig. 10: eine Schrägansicht auf das Verbundglas nach Fig. 9;
- Fig. 11: vier Ausführungsformen des Transducers des Überwachungssystems in einer schematischen Darstellung;
- Fig. 12: zwei weitere Ausführungsformen des Transducers des Überwachungssystems in einer schematischen Darstellung;
- Fig. 13: drei Ausgestaltungen hinsichtlich der Formgebung des Transducers des Überwachungssystems in einer schematischen Darstellung;
- Fig. 14: zwei Ausgestaltungen der Transduceranordnung in Bezug auf einen Randbereich der Schutzscheibe des Überwachungssystems in einer jeweils schematischen Darstellung;
- Fig. 15: schematische Schnittdarstellungen von fünf Varianten einer möglichen Transducerpositionierung in Bezug auf eine Schutzscheibe des Überwachungssystems;
- Fig. 16: eine schematische Darstellung einer Transducergruppe zur Erzeugung einer stehenden Welle in der Schutzscheibe des Überwachungssystems;
- Fig. 17: drei weitere schematische Darstellungen von mindestens zwei Transducergruppen zur Erzeugung von stehenden Wellen in der Schutzscheibe des Überwachungssystems;
- Fig. 18: eine schematische Darstellung von verschiedenen Modi, unter denen die Transducer des Überwachungssystems betreibbar sind;
- Fig. 19: zwei Alternativen für einen Ansteuerungsschaltkreis der Transducer der Überwachungsvorrichtung in einem schematischen Schaltbild;
- Fig. 20: vier Alternativen für ein Temperaturmanagementsystem zur Überwachung der Betriebstemperatur der Transducer der Überwachungsvorrichtung in einem schematischen Schaltbild;
- Fig. 21: schematische Schnittdarstellungen einer Schutzscheibe der Überwachungsvorrichtung mit darauf angeordneten Transducern und
- Fig. 22: eine Ausführungsform der Verbindung des jeweiligen Transducers mit der Schutzscheibe der Überwachunsgvorrichtung.

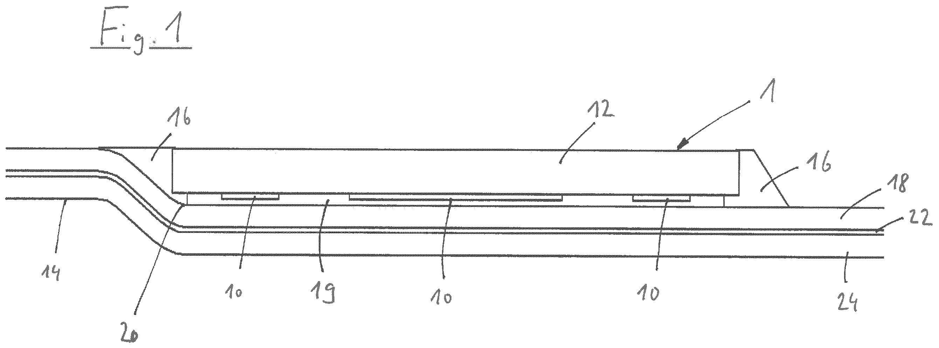

Die nachfolgend beschriebenen Ausführungsformen von Überwachungssystemen weisen jeweils in den Zeichnungen nicht dargestellte Kameras oder sonstige optische Einrichtungen mit diesen zugeordneten Linsen und Schutzscheiben auf, die in unterschiedlichen Ausbildungen ausgeführt sein können. Identische oder ähnliche Elemente werden in den nachfolgenden Figuren mit denselben Bezugszeichen gekennzeichnet. Die Schutzscheiben sind entweder auf hier als Verbundglasscheiben ausgeführten Schutzscheiben für z.B den Einsatz in Kraftfahrzeugen zusätzlich angebracht (siehe Fig. 1 bis 6) oder integriert. Besonders zweckmäßig sind Ausführungsformen, bei denen die Schutzscheibe speziell zum Schutz einer Kamera angepasst ist und beispielsweise als transparente Glocke oder transparenter Abschluss eines Kameragehäuses ausgebildet ist. Die Querschnitte bei all diesen völlig unterschiedlich geformten und ggf. stark gekrümmten Schutzscheiben können im Aufbau im Wesentlichen die selben sein. In allen dargestellten Ausführungsbeispielen ist das Sichtfeld der Kamera auf einen Bereich zwischen Transducern 10 beschränkt, die Ultraschall gezielt in die Schutzscheibe einleiten, um das Sichtfeld der Kamera von Niederschlag zu befreien, worunter unter anderem neben Regen auch Eis, Reif und Kondensat zu verstehen ist. Der bevorzugte Frequenzbereich des eingeleiteten Ultraschalls liegt in einem Bereich zwischen 0,5 und 5 MHz, wobei nicht alle jeweils in einem Kamerasystem vorgesehenen Transducer dieselbe Frequenz abstrahlen müssen.

In Fig. 1 ist eine erste Ausführungsform eines Kamerasystems 1 mit einer Zusatzschutzscheibe 12, gezeigt, die auf der der Witterung ausgesetzten Außenseite auf einer Zusatzschutzscheibe 14 aus Verbundglas mit Hilfe von Glaskleber 16 aufgebracht ist. Die Zusatzschutzscheibe 12 besteht hier aus einem keramischen Material und liegt in einem Abstand zu einer äußeren Glaslage 18 des Verbundglases, so dass zwischen diesem und der Zusatzschutzscheibe 12 ein Hohlraum 19 verbleibt. In diesem sind ringförmig vier Transducer 10 um ein Sichtfeld der Kamera angeordnet, die auf der Innenseite des Verbundglases der Zusatzschutzscheibe 12 gegenüberliegend angeordnet ist. Das keramische Material besitzt aufgrund seine Härte eine besondere Widerstandsfähigkeit gegen Oberflächenverschleiß, so dass die Durchsicht für die Kamera länger gewahrt bleibt und das Sichtfeld unempfindlicher gegen Steinschläge und dergleichen ist.

Die Besonderheit der in Fig. 1 bis 4 ausschnittsweise dargestellten Schutzscheibe 14 besteht darin, dass die Zusatzschutzscheibe 12 in einer Absenkung 20 angeordnet ist, die im Randbereich der Schutzscheibe angeordnet ist. Dadurch ist es möglich, dass die Zusatzschutzscheibe mit ihrer äußeren Oberfläche bündig zu der äußeren Oberfläche der Schutzscheibe abschließt. Auf diese Weise ist es möglich, für die Zusatzschutzscheibe 12 ein anderes (hier härteres) Material zu wählen als für die Schutzscheibe 14 selbst und beide Oberflächen mit einem gemeinsamen Scheibenwischer zu reinigen, der im Bereich der Schutzscheibe 12 die Reinigungswirkung der Ultraschall-Transducer 10 unterstützt. Für den Fall, dass ein Scheibenwischer vorgesehen ist, dessen Wischfeld auch die Schutzscheibe 12 abdeckt. Idealerweise ist die Absenkung der Form der Schutzscheibe angepasst.

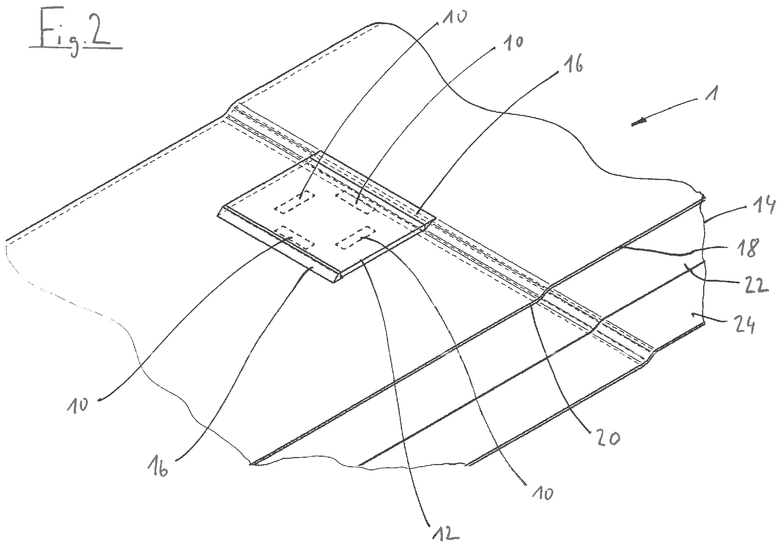

Zur Veranschaulichung sind in Fig. 2 bis 4 Ansichten einer einfachen Variante gezeigt, bei der die Schutzscheibe bündig an den höheren Bereich anschließt. Dabei ist die Anordnung der vier Transducer 10 um das Sichtfeld der Kamera gut zu erkennen. Die Transducer 10 können Ultraschallwellen unterschiedlicher Frequenzen und Wellenformen abstrahlen. Es kann auch eine abweichende Anzahl von Transducern vorgesehen sein, die seitlich des Sichtfeldes angeordnet sind.

In Fig, 2 ist weiterhin der Aufbau der Schutzscheibe 14 erkennbar, die als Verbundglas in üblicher Art und Weise die bereits erwähnte äußere Glaslage 18, eine innere Glaslage 22 und eine zwischen den Glaslagen liegende Laminatlage 24 aufweist.

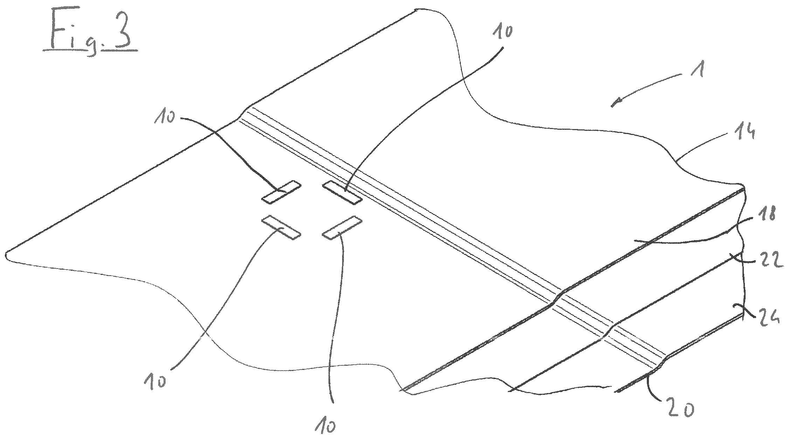

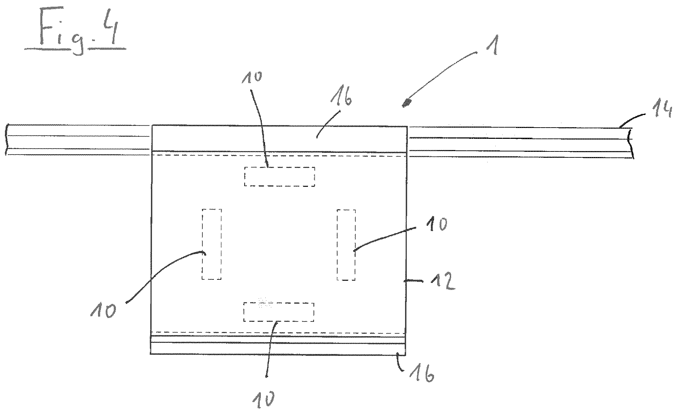

Fig. 3 zeigt eine Draufsicht, während in Fig. 4 die Zusatzschutzscheibe in der Darstellung weggelassen worden ist, um die Transducer 10 besser zu zeigen. Gleichwohl sind die Transducer nicht an der Außenfläche der Schutzscheibe 14 sondern der Innenfläche der Schutzscheibe 12 befestigt und akustisch angekoppelt.

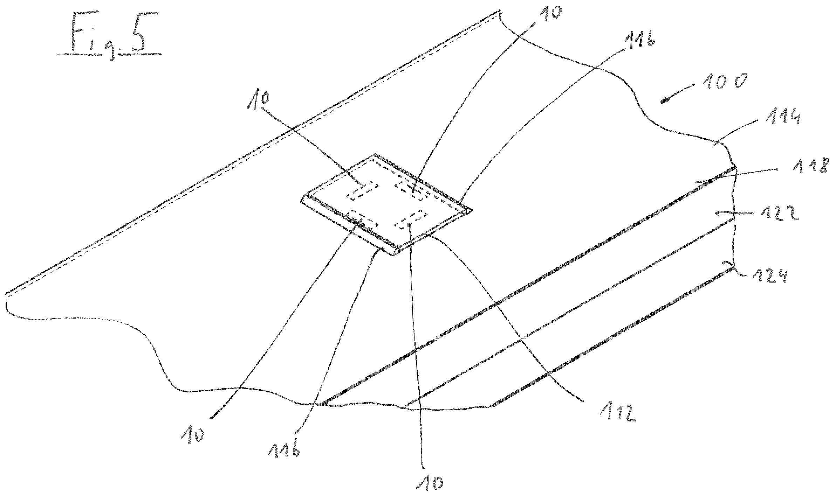

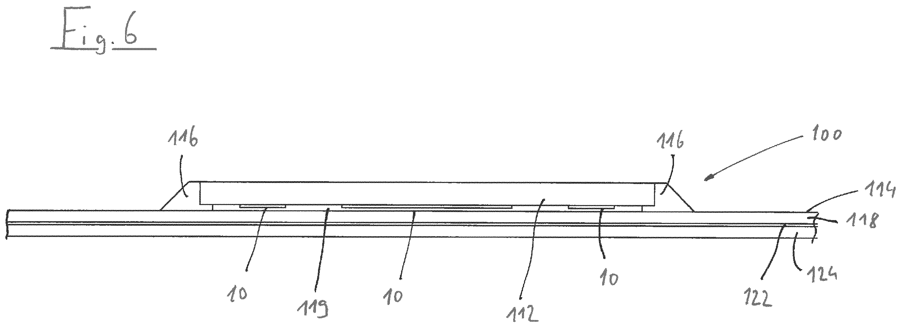

Fig. 5 und 6 zeigen ein weiteres Kamerasystem 100, bei welchem eine im Prinzip übliche Schutzscheibe 114 aus Verbundglas im Bereich des Sichtfeldes der Kamera (nicht gezeigt) mit einer Zusatzschutzscheibe 112 versehen ist, die wiederum über Glaskleber 116 auf der Außenfläche der äußeren Glaslage 118 aufgebracht ist. Zwischen der Zusatzschutzscheibe 112 und der Oberfläche der Schutzscheibe 114 ist wiederum ein Hohlraum 119 vorgesehen, in welchem die akustisch mit der inneren Oberfläche der Schutzscheibe 112 gekoppelten Transducer 10 angeordnet sind. Da die Zusatzschutzscheibe bei dieser Lösung über die Außenfläche der Schutzscheibe übersteht, ist eine Reinigung der Außenfläche der Zusatzschutzscheibe 112 mit dem Scheibenwischer der Schutzscheibe nicht möglich, so dass die Zusatzschutzscheibe 112 außerhalb des Wischfeldes angeordnet ist und der Niederschlag ausschließlich mittels Ultraschall beseitigt wird.

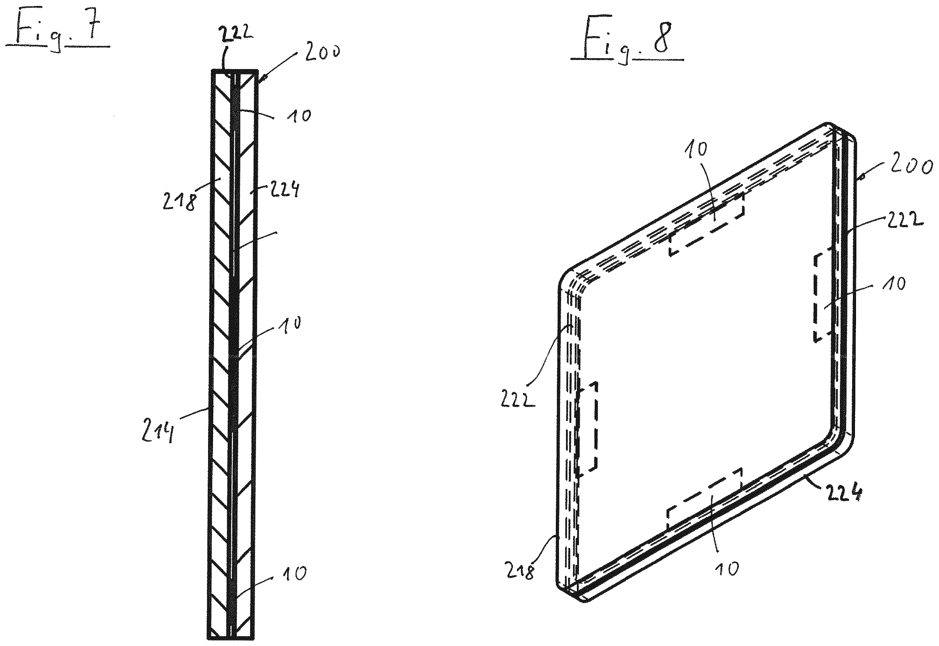

In Fig. 7 und 8 ist eine Ausführungsform eines Kamerasystems 200 gezeigt, bei welcher bei einer Zusatzschutzscheibe 214 aus Verbundglas die Laminatlage 224 im Bereich des Sichtfeldes der Kamera ausgespart ist, während der äußeren Glaslage 218 unmittelbar die Funktion der zuvor separaten Zusatzschutzscheibe für das Kamerasystem 200 zukommt. Wiederum begrenzen die vier Piezo-Transducer 10 das Sichtfeld der Kamera seitlich, wobei ggf. auch eine Tragstruktur 226 in einen ausgesparten Bereich der inneren Glaslage eingesetzt sein kann, die die elektrischen Anschlüsse für die Transducer halten kann und auch als Aufnahme für die Kamera dienen kann.

In Fig.8 ist der Aufbau der Schutzscheibe 214 gut erkennbar. Aus der Laminatlage 224 zwischen der der inneren Glaslage 222 und der äußeren Glaslage ist ein Segment ausgenommen, in dem die vier Transducer 10 um das Sichtfeld der Kamera herum angeordnet, hier allerdings unmittelbar mit der äußeren Glaslage 218 der Schutzscheibe akustisch gekoppelt. Die Anordnung der Transducer 10, die Ultraschallfrequenzen und -wellenformen sind so eingestellt, dass die Ultraschallamplituden insbesondere im Sichtfeld der Kamera besonders groß sind, um dort eine optimale Beseitigung von Feuchtigkeit zu bewirken. Ggf. können auch Strukturen in der äußeren Glaslage 218 vorgesehen sein, die die zielgerichtete Ausbreitung der Ultraschallwellen fördern.

Die als Verbundglasscheibe ausgebildete Schutzscheibe 214 kann sich auch deutlich seitlich über das Sichtfeld der Kamera hinaus erstrecken, so dass der gezeigte Schutzscheibenbereich mit den Transducern nur ein Teilfeld der gesamten Schutzscheibe bildet. Bei dieser Ausführungsform kann das Wischfeld der Scheibenwischer das Sichtfeld der Kamera problemlos mit abdecken, sofern dies gewünscht ist.

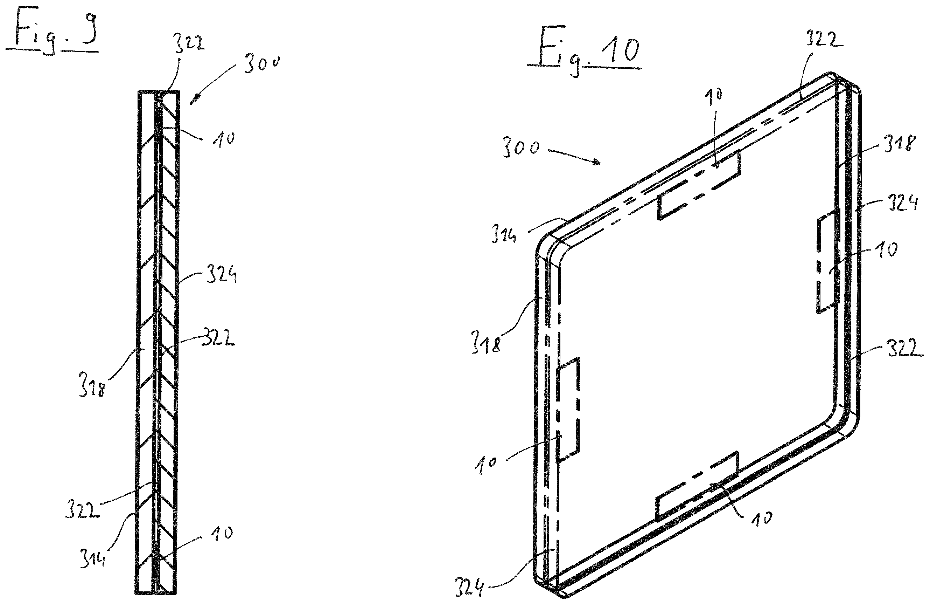

Schließlich wird in Fig. 9 und 10 noch eine weitere Ausführungsform eines Kamerasystems 300 vorgestellt, bei welcher die Transducer 10 in die Laminatlage 324 einer Schutzscheibe 314 aus Verbundglas eingebettet sind. Hierbei sind die Höhen der Transducer 10 auf die Dicke der Laminatlage 324 abgestimmt. Im Übrigen liegt auch hier das Sichtfeld der Kamera in der Zone zwischen den Transducern 10, die wiederum mit der äußeren Glaslage 318 der Schutzscheibe akustisch gekoppelt sind. Selbstverständlich ist es auch hier ohne weiteres möglich, das Sichtfeld der Kamera mit ggf. vorhandenen Scheibenwischern zusätzlich zu reinigen. Wenn sich die Glaslagen und auch die Laminatlage als Sichtfenster noch weiter erstrecken, so dass das Sichtfeld der Kamera wiederum nur einen kleinen Teil einer größeren Scheibe ausmacht. Auch hier können Strukturen in der äußeren Glaslage 318 helfen, den Ultraschall auf das Sichtfeld der Kamera zu fokussieren, sofern dies für notwendig erachtet wird.

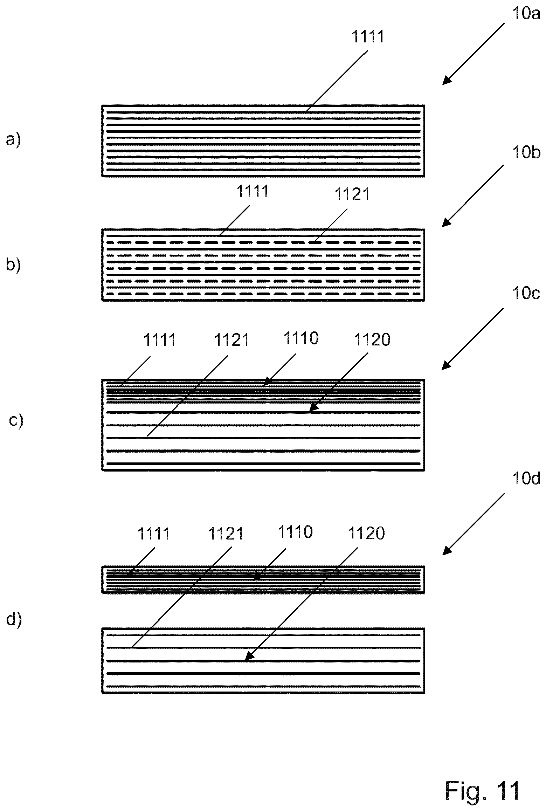

**Fig. 11 a) bis d)** zeigt den Transducer 10 schematisch in vier verschiedenen Ausführungsformen 10a, 10b, 10c und 10d.

Der Transducer 10a aus **Fig. 11 a)** weist regelmäßig beabstandete Elektroden 1111 auf.

Der Transducer 10b aus **Fig. 11 b)** weist mindestens eine erste Elektrode 1111 und mindestens eine zweite Elektrode 1121 auf. Die ersten Elektroden 1111 und die zweiten Elektroden 1121 sind in der Ausführungsform 10b des Transducers 10 gemäß Fig. 11 b) wechselweise angeordnet. Die zweiten Elektroden 1121 sind diskontinuierlich ausgebildet, während die ersten Elektroden 1111 kontinuierlich ausgebildet sind.

In **Fig. 11 c)** ist eine weitere Ausführungsform 10c des Transducers 10 dargestellt, wonach die ersten Elektroden 1111 in einer ersten Elektrodengruppe 1110 und die zweiten Elektroden 1121 in einer zweiten Elektrodengruppe 1120 gruppiert sind. Die Elektrodengruppen 1110, 1120 sind in diesem Ausführungsbeispiel nicht überlappend. Die Dimensionen und Abstände der ersten Elektroden 1111 in der ersten Elektrodengruppe 1110 sind im Wesentlichen identisch. Gleiches gilt für die Abstände und für die Dimensionen der Elektroden 1121 der zweiten Elektrodengruppe 1120.

**Fig. 11 d)** zeigt eine weitere Ausführungsform 10d des Transcers 10, der der Ausführungsform 10c im Wesentlichen entspricht, mit der Ausnahme, dass die erste Elektrodengruppe 1110 mit den ersten Elektroden 1111 in einem ersten Transducerteil angeordnet ist, der räumlich von einem zweiten Transducerteil beabstandet ist, in dem die zweite Elektrodengruppe 1120 mit den zweiten Elektroden 1121 angeordnet ist.

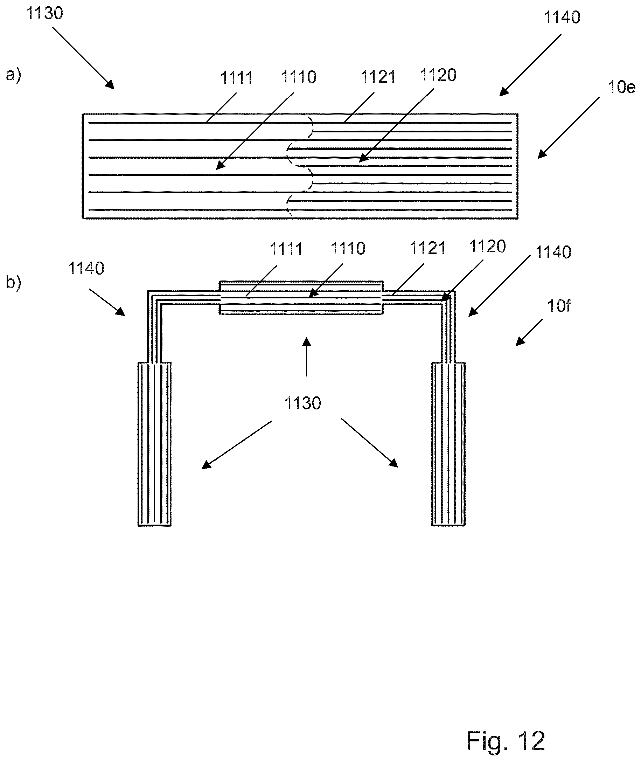

**Fig. 12 a)** zeigt eine weitere Ausführungsform 10e des Transducers 10, wobei der Transducer 10e in zwei Bereiche 1030 und 1040 aufgeteilt ist, wobei die erste Elektrodengruppe 1110 in dem ersten Bereich 1130 angeordnet ist und die zweite Elektrodengruppe 1120 in dem zweiten Bereich angeordnet ist.

**Fig. 12 b)** zeigt eine alternative Ausführungsform 10d des Transducers 10, wobei der Transducer 10f ebenfalls in zwei Bereiche 1030 und 1040 aufgeteilt ist. Diese Ausführungsform unterscheidet sich dadurch, dass die Bereiche 1130 und 1140 jeweils nicht zusammenhängend sind, sondern entlang des Transducers 10f wechselweise angeordnet sind. Ansonsten entspricht die Ausgestaltung des Transducers 10f der Ausgestaltung des Transducers 10e aus Fig. 12 a). Der Transducer an sich ist hierbei unterbrechungsfrei, also zusammenhängend ausgestaltet.

In der Ausführungsform gem. Fig. 12 b) ist der Transducer 10f hufeisenförmig bzw. U-förmig ausgebildet, wobei der zweite Bereich 1140 im Eckbereich des Transducers 10f angeordnet ist und der erste Bereich 1130 zwischen den Enden und den Eckbereichen des Transducers 10f angeordnet ist.

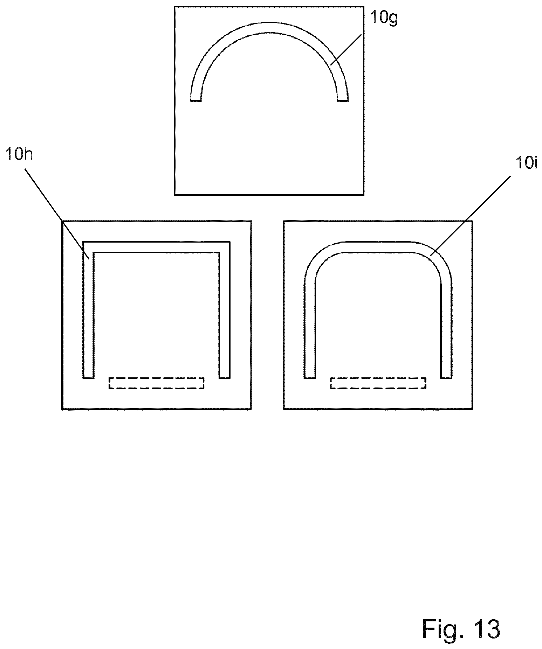

**Fig. 13** zeigt drei weitere Ausführungsformen 10g, 10h, 10i des Transducers 10, die allesamt eine U-Form bzw. eine Hufeisenform aufweisen. Der Transducer 10 nach der Ausführungsform 10g weist keine dedizierten Eckbereiche auf, während die Ausführungsform 10h des Transducers 10 spitze Eckbereiche und die Ausführungsform 10i des Transducers 10 abgerundete Eckbereiche des hufeisenförmigen Transducers 10 aufweist.

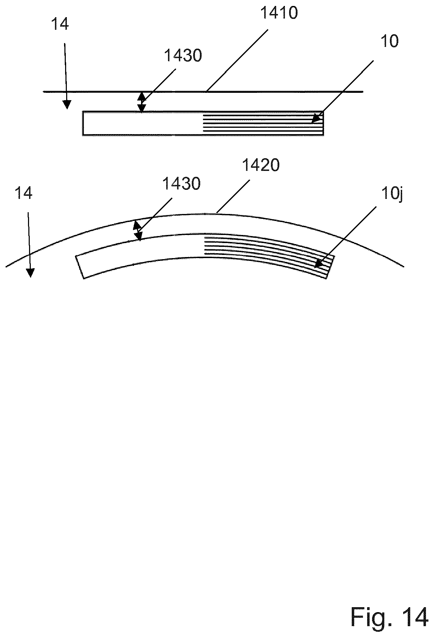

**Fig. 14** zeigt schematisch zwei Ausführungsbeispiele für eine Anordnung des Transducers 10 auf dem Substrat bzw. der Schutzscheibe 14. Der Transducer 10, 10j ist parallel zu dem Rand 1410, 1420 ausgebildet. Der Rand 1420 ist hierbei gekrümmt, sodass der Transducer 10j ebenfalls eine gekrümmte Form aufweist. Es versteht sich von selbst, dass dieses Ausführungsbeispiel nicht hierauf beschränkt ist, sondern auch andere Rand- bzw.

Transducerformen vorgesehen sein können. Ebenfalls ist der Randabstand 1430 zwischen dem Transducer 10, 10j und dem jeweiligen Rand 1410 und 1420 entsprechend der durch den jeweiligen Transducer 10, 10j erzeugten Frequenzen der Schallwellen einstellbar, sodass am Rand 1410, 1420 reflektierte Schallwellen mit den vom Transducer 10, 10j ausgesendeten Schallwellen konstruktiv interferieren.

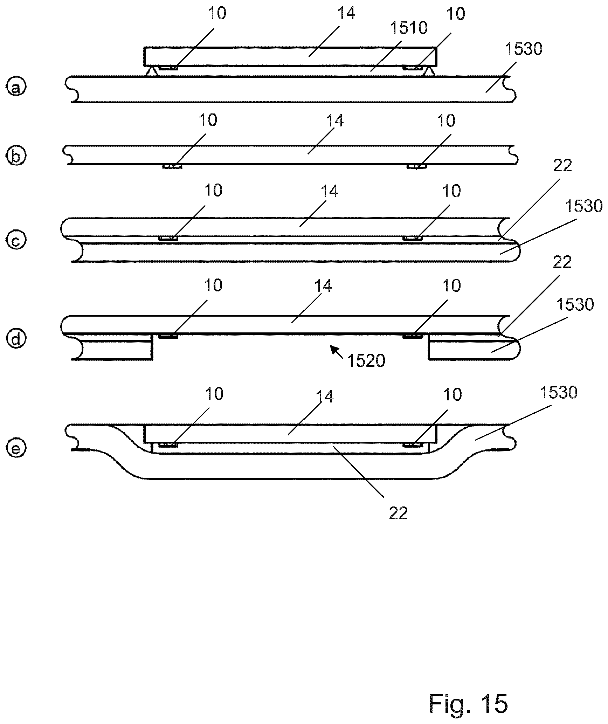

**Fig. 15** zeigt verschiedene Ausführungsformen der Anordnung des Transducers 10 auf dem Substrat bzw. der Schutzscheibe 14. Gemäß der Ausführungsform nach **Fig. 15 a)** ist der Transducer in einem Zwischenraum 1510 zwischen dem Substrat bzw. der Schutzscheibe 14 und einer weiteren Scheibe 1530 angeordnet. Gemäß **Fig. 15 b)** ist der Transducer 10 auf einer Seite des Substrats bzw. der Schutzscheibe 14 angeordnet, welche beispielsweise die Seite sein kann, die einem möglichen Niederschlag auf das Substrat bzw. die Schutzscheibe 14 gegenüberliegt. **Fig. 15 c)** zeigt eine weitere Ausführungsform der Transduceranordnung, wobei der Transducer in eine laminierte Scheibe eingebracht ist. Die Scheibe weist eine Laminatlage 22 zwischen dem Substrat bzw. der Schutzscheibe 14 und einer weiteren Scheibe 1530 auf. Der Transducer 10 ist in dieser Laminatlage angeordnet bzw. mit einlaminiert. **Fig. 15 d)** betrifft ebenfalls eine laminierte Scheibe aus dem Substrat bzw. der Schutzscheibe 14 mit dem Transducer 10, einer Laminatlage 22 und einer weiteren Scheibe 1530. Hierbei ist der Transducer in einer Mächtigkeitsaussparung 1520 angeordnet. Die Mächtigkeitsaussparung 1520 ist in diesem Ausführungsbeispiel als Aussparung der Laminatlage 22 und der weiteren Scheibe 1530 ausgebildet. **Fig. 15 e)** betrifft schließlich eine Ausführungsform, wonach die weitere Scheibe eine dreidimensionale Form aufweist und einen Aufnahmeraum für das Substrat bzw. die Schutzscheibe 14 mit dem daran angeordneten Transducer 10 bildet. Der Transducer 10 ist auf der der weiteren Scheibe 1530 zugewandten Seite des Substrats bzw. der Schutzscheibe 14 angeordnet. Das Substrat bzw. die Schutzscheibe 14 ist über eine Laminatlage 22 mit der weiteren Scheibe 1530 verbunden, wobei der Transducer 10 in dieser Laminatlage 22 einliegt bzw. darin einlaminiert ist.

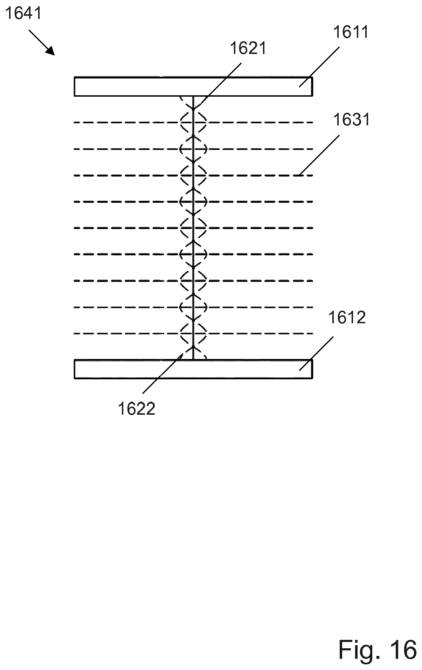

**Fig. 16** zeigt ein Ausführungsbeispiel einer Anordnung von zwei Transducern 1611, 1612. Die zwei Transducer 1611, 1612 bilden eine erste Transducergruppe 1641. Die Transducer 1611, 1612 sind im Wesentlichen entlang einer zentralen Achse aneinander zentriert ausgerichtet und weisen jeweils eine lange und eine kurze Seite auf. Die Transducer 1611, 1612 sind daher im Wesentlichen rechteckig ausgebildet. Die Transducer 1611, 1612 stehen sich mit jeweils einer langen Seite gegenüber. Der Abstand zwischen den Transducern 1611, 1612 ist derart bemessen, dass der Abstand im Wesentlichen einem Vielfachen der Wellenlänge einer durch die Transducer 1611, 1612 erzeugten Wellenlänge einer Oberflächen- oder Raumwelle entspricht. Die Transducer 1611, 1612 senden Ultraschallwellen 1621, 1622 aus und werden im Wesentlichen mit gleicher Frequenz, gleicher Amplitude und gleicher Phase betrieben.

Dadurch, dass die Transducer 1611, 1612 gegenüberliegend angeordnet sind, bildet sich zwischen den Transducern 1611, 1612 eine stehende Welle 1631 mit großer Amplitude aus.

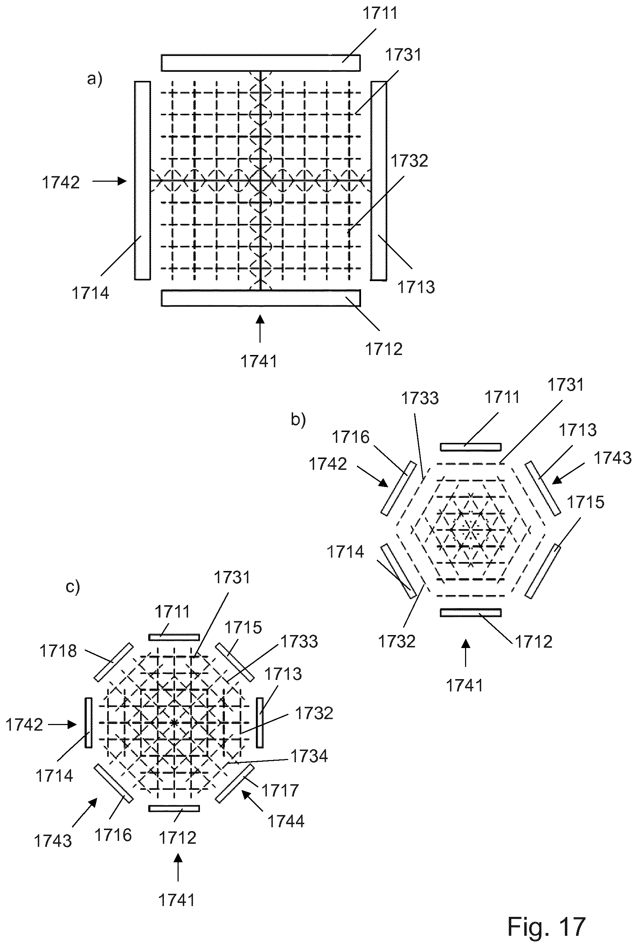

**Fig. 17 a) - c)** zeigt drei weitere Ausführungsformen einer Anordnung von Transducergruppen 1741, 1742, 1743, 1744, jeweils aufweisend mindestens zwei der Transducer 1711, 1712, 1713, 1714, 1715, 1716, 1717, 1718.

Die Ausführungsform nach **Fig. 17 a)** zeigt die kreuzweise Anordnung zweier Transducergruppen 1741, 1742, wobei die erste Transducergruppe entsprechend dem Ausführungsbeispiel gem. Fig. 16 zwei Transducer 1711, 1712 und die zweite Transducergruppe 1742 ebenfalls zwei Transducer 1713, 1714 aufweist. Die erste Transducergruppe 1741 ist in einer Wellenausbreitungsrichtung im Wesentlichen senkrecht zu der zweiten Transducergruppe 1742 ausgerichtet. Die stehende Welle 1731, die zwischen den Transducern 1711, 1712 der ersten Transducergruppe 1741 ausgebildet ist, verläuft also im Wesentlichen senkrecht zu der stehenden Welle 1732, die zwischen den Transducern 1713, 1714 der zweiten Transducergruppe 1742 ausgebildet ist. Über Interferenzen zwischen den stehenden Wellen 1731, 1732 bildet sich ein netzartiges Muster von Wellentälern und Wellenbergen zwischen den Transducern 1711, 1712, 1713 und 1714 aus, wobei die Netzzellen viereckig sind.

Die Ausführungsform nach **Fig. 17 b)** zeigt eine Anordnung dreier Transducergruppen 1741, 1742, 1743, wobei die erste Transducergruppe entsprechend dem Ausführungsbeispiel gemäß Fig. 16 zwei Transducer 1711, 1712, die zweite Transducergruppe 1742 ebenfalls zwei Transducer 1713, 1714 und die dritte Transducergruppe 1743 gleichermaßen zwei Transducer 1715, 1716 aufweist. Die Transducergruppen 1741, 1742, 1743 mit den paarweise gegenüberliegenden Transducern 1711, 1712, 1713, 1717, 1715, 1716 sind derart angeordnet, dass sich ein im Wesentlichen hexagonaler Außenumfang der Anordnung ergibt. Zwischen der Wellenausbreitungsrichtung der stehenden Wellen 1731, 1732, 1733 zweier in Umfangsrichtung der Anordnung benachbarter Transducergruppen 1741, 1742, 1743 ist jeweils ein Winkel von ca. 60 ° ausgebildet. Über Interferenzen zwischen den stehenden Wellen 1731, 1732, 1733 bildet sich ein netzartiges Muster von Wellentälern und Wellenbergen zwischen den Transducern 1711, 1712, 1713, 1714, 1715 und 1716 aus, wobei die Netzzellen dreieckig sind.

Die Ausführungsform nach **Fig. 17 c)** zeigt eine weitere Anordnung vierer Transducergruppen 1711, 1712, 1713, 1714, wobei die erste Transducergruppe entsprechend dem Ausführungsbeispiel gemäß Fig. 16 zwei Transducer 1711, 1712 aufweist. Die zweite Transducergruppe 1742 weist ebenfalls zwei Transducer 1713, 1714 auf und ist gegenüber der ersten Transducergruppe 1741 in der jeweiligen Wellenausbreitungsrichtung zwischen den Transducern 1711, 1712, 1713, 1714 der Transducergruppen 1741, 1742 im Wesentlichen senkrecht angeordnet. Die dritte Transducergruppe 1743 und die vierte Transducergruppe 1744 weisen gleichermaßen jeweils zwei Transducer 1715, 1716 bzw. 1717, 1718 auf. Zwischen der Wellenausbreitungsrichtung der stehenden Wellen 1731 der ersten Transducergruppe 1741 und der Wellenausbreitungsrichtung der stehenden Wellen 1733 der dritten Transducergruppe 1743 ist ein Winkel von ca. 45° eingeschlossen. Zwischen der Wellenausbreitungsrichtung der stehenden Wellen 1732 der zweiten Transducergruppe 1742 und der Wellenausbreitungsrichtung der stehenden Wellen 1734 der vierten Transducergruppe 1744 ist ebenfalls ein Winkel von ca. 45° eingeschlossen. Es ergibt sich ein im Wesentlichen oktogonaler Außenumfang der Anordnung. Über Interferenzen zwischen den stehenden Wellen 1731, 1732, 1733, 1734 bildet sich ein netzartiges Muster von Wellentälern und Wellenbergen zwischen den Transducern 1711, 1712, 1713, 1714, 1715, 1716, 1717 und 1718 aus.

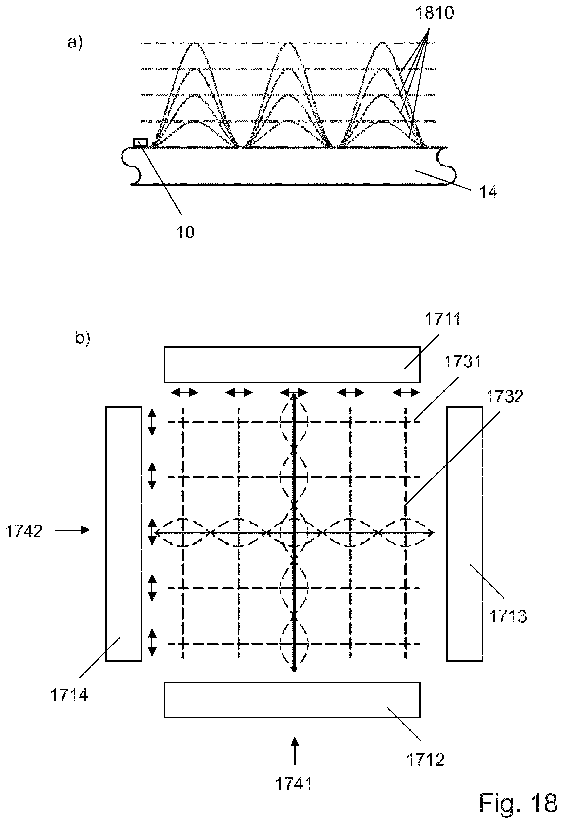

**Fig. 18 a) und b)** zeigen Ausführungsbeispiele für Betriebsmodi der Transducer 10. Der Transducer 10 wird von einem nicht dargestellten Generator mit einem Treibersignal versorgt und generiert Ultraschallwellen 1810. In **Fig. 18 a)** weisen diese Ultraschallwellen 1810, die von dem auf dem Substrat bzw. der Schutzscheibe 14 angeordneten Transducer 10 ausgesendet werden, eine Amplitudenmodulation auf.

Gemäß **Fig. 18 b)** ist ein Betriebsmodus für das Ausführungsbeispiel der Transduceranordnung nach Fig. 17 a) dargestellt. Die Transducer 1711, 1712 der ersten Transducergruppe 1741 werden mit einem phasenmodulierten Treibersignal angesteuert, während die Transducer 1713, 1714 der zweiten Transducergruppe 1742 ebenfalls mit einem phasenmodulierten Treibersignal angesteuert werden. Auf diese Weise verschieben sich die Maxima der interferierenden stehenden Wellen 1731, 1732.

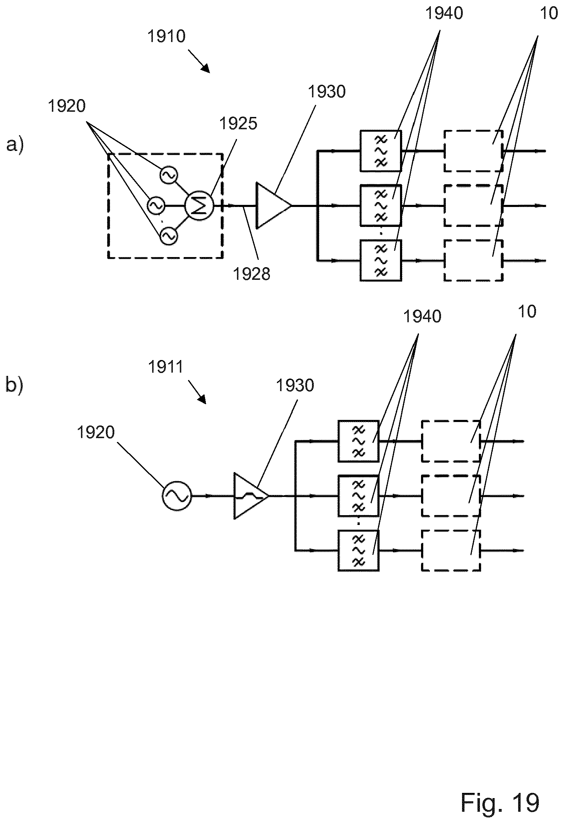

**Fig. 19 a)** und **Fig. 19 b)** zeigen eine Ausführungsform jeweils eines Ansteuerungsschaltkreises 1910, 1911 für die Transducer 10.

Gemäß der Ausführungsform nach **Fig. 19 a)** wird der Ansteuerungsschaltkreis mit mindestens einem Signal 1920 versorgt, wobei das mindestens eine Signal 1920 eine spezifische Frequenz aufweist. Das mindestens eine Signal 1920 wird mittels eines Summierers 1925 zu einem Summensignal 1928 summiert. Dieses Summensignal 1928 wird mittels eines Verstärkers 1930, der in dieser Ausführungsform als Linearverstärker ausgebildet ist, verstärkt. Im weiteren Signalweg ist vor dem mindestens einen Transducer 10 jeweils ein Filter 1940 angeordnet. Der jeweilige Filter 1940 weist einen Eingang für das aus dem Verstärker 1930 austretende verstärkte Summensignal 1928 und mindestens eine Grenzfrequenz auf, sodass nur ein gewisser Frequenzbereich des verstärkten Summensignals 1928 dem jeweiligen Transducer 10 zugeleitet wird.

Gemäß der Ausführungsform nach Φ 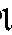 γ. 19 β) ist für den Ansteuerungsschaltkreis 1911 vorgesehen, dass das Signal 1920 durch einen Verstärker 1930, der in dieser Ausführungsform als nicht-linearer Verstärker ausgebildet ist, verstärkt wird. Durch den Verstärker 1930 werden Oberschwingungen erzeugt, welche durch die Filter 1940, jeweils aufweisend mindestens eine Grenzfrequenz, aus dem verstärkten Signal 1920 separiert werden und entsprechend separiert dem mindestens einen Transducer 10 zugeleitet werden.

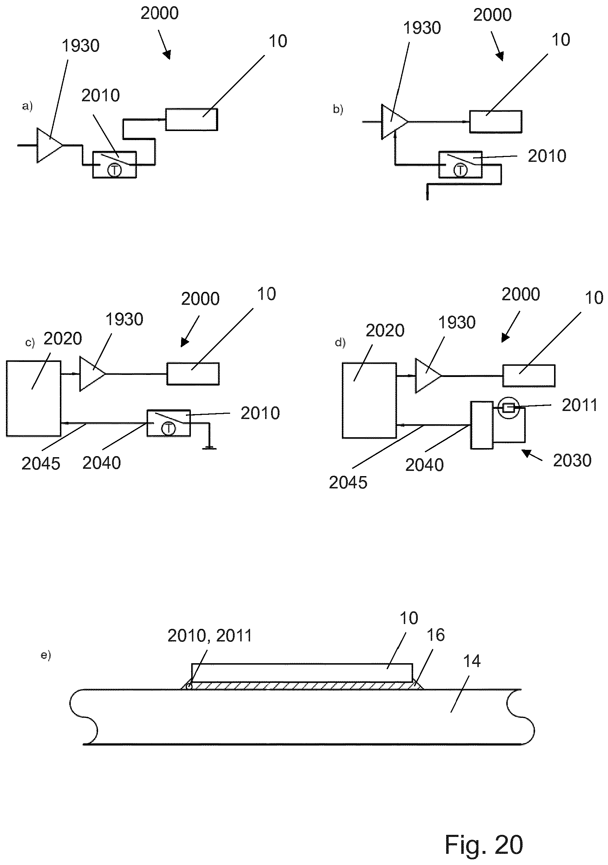

**Fig. 20 a) bis d)** zeigt unterschiedliche Ausführungsformen des Temperaturmanagementsystems 2000 für einen Ansteuerungsschaltkreis nach einem der Ausführungsbeispiele aus Fig. 19. Nach der Ausführungsform gemäß **Fig. 20 a)** weist das Temperaturmanagementsystem 2000 einen Schaltkreisunterbrecher 2010 auf, der zwischen dem Verstärker und dem Transducer angeordnet ist. Der Schaltkreisunterbrecher 2010 kann manuell und/oder automatisch zurückzustellen sein. Gemäß **Fig. 20 b)** weist das Temperaturmanagementsystem 2000 einen Schaltkreisunterbrecher 2010 mit einem Steuersignalausgang 2040 auf, aus dem ein Steuersignal 2045 an den Verstärker 1930 geleitet wird. Der Verstärker ist über dieses Steuersignal 2045 schaltbar, sodass das Signal an den Transducer 10 in Abhängigkeit von dem Steuersignal 2045 geschaltet ist. **Fig. 20 c)** betrifft eine Ausführungsform des Temperaturmanagementsystems 2000, wonach der Schaltkreisunterbrecher mit dem Signalausgang 2040 an eine Steuerungseinheit 2020 angeschlossen ist und die Steuerungseinheit 2020 einen Schaltzustand des Verstärkers 1930 in Abhängigkeit von dem durch den Signalausgang 2040 des Schaltkreisunterbrechers 2010 zugeleiteten Signal steuert. F**ig. 20 d)** betrifft eine weitere Ausführungsform des Temperaturmanagementsystems 2000. In dieser Ausführungsform weist das Temperaturmanagementsystem einen Temperatursensor 2011 auf. Dieser kann beispielsweise als Heiß- oder Kaltleiter ausgebildet sein. Der Temperatursensor wird durch eine Temperatursensorschaltung 2030 betrieben. Diese Temperatursensorschaltung 2030 hat einen Signalausgang 2040, an den an eine Steuerungseinheit 2020 angeschlossen ist. Die Steuerungseinheit 2020 steuert einen Schaltzustand des Verstärkers 1930 in Abhängigkeit von dem durch den Signalausgang 2040 des Schaltkreisunterbrechers 2010 zugeleiteten Signals.

**Fig. 20 e)** zeigt eine mögliche Ausführung der Anordnung des Schaltkreisunterbrechers 2010 oder des Temperatursensors 2011 des Temperaturmanagementsystems 2000. Hierbei ist der Temperatursensor 2011 oder der Schaltkreisunterbrecher in einem peripheren Bereich einer zwischen dem Substrat bzw. der Schutzscheibe 14 und dem Transducer 10 angeordneten Verbindungsschicht 16 eingelassen.

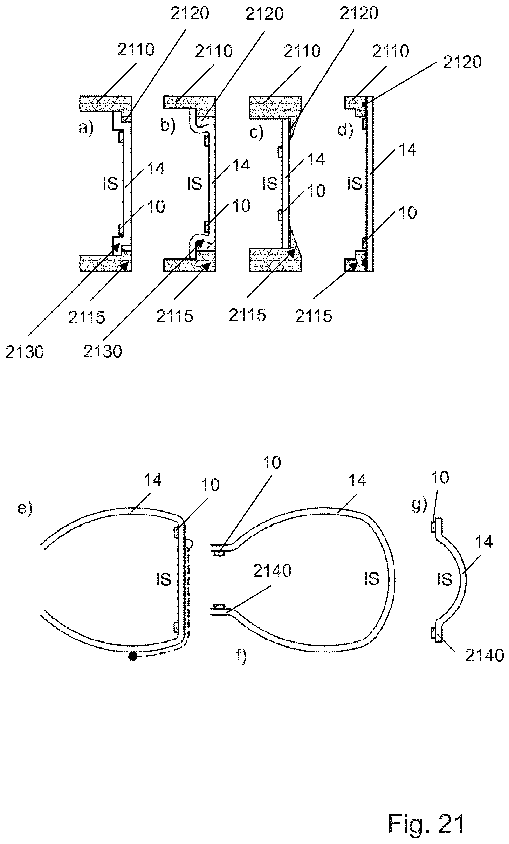

**Fig. 21 a) bis g)** zeigt unterschiedliche Ausführungsformen von Schutzscheiben 14 und darauf angeordneten Transducern 10.

**Fig. 21 a) bis d)** betrifft den Einbau einer Schutzscheibe 14 bzw. des Substrats in einen Scheibenrahmen 2110. Hierbei ist das Substrat bzw. die Schutzscheibe 14 gemäß der Variante nach **Fig. 21 a)** an dem äußeren Umfang in einem Anlagebereich 2130 Z-förmig ausgebildet, um mit einem Flanschbereich 2115 des Scheibenrahmens 2110 in Eingriff zu kommen. Zwischen dem Scheibenrahmen 2110, insbesondere dem Flanschbereich 2115 und dem Substrat bzw. der Schutzscheibe 14 und davon insbesondere an einer Umfangsseite des Anlagebereichs 2130 ist eine Dichtung 2120 angeordnet. Mindestens ein Transducer 10 ist auf der Innenseite IS des Substrats bzw. der Schutzscheibe 14 angeordnet.

Gemäß der Variante nach **Fig. 21 b**) ist das Substrat bzw. die Schutzscheibe 14 an dem äußeren Umfang in einem Anlagebereich 2130 S-förmig ausgebildet, um mit dem Flanschbereich 2115 des Scheibenrahmens 2110 in Eingriff zu kommen. Zwischen dem Scheibenrahmen 2110, insbesondere dem Flanschbereich 2115 und dem Substrat bzw. der Schutzscheibe 14 und davon insbesondere an einer Umfangsseite des Anlagebereichs 2130 ist eine Dichtung 2120 angeordnet. Mindestens ein Transducer 10 ist auf der Innenseite IS des Substrats bzw. der Schutzscheibe 14 angeordnet.

In der Ausführungsform nach **Fig. 21 c)** ist das Substrat bzw. die Schutzscheibe 14 im Wesentlichen plan ausgebildet und liegt an der Innenseite IS des Flanschbereichs 2115 des Scheibenrahmens 2110 an. Im Überdeckungsbereich des Flanschbereichs 2115 mit dem Substrat bzw. der Schutzscheibe 14 ist eine Dichtung 2120 angeordnet. Mindestens ein Transducer 10 ist auf der Innenseite IS des Substrats bzw. der Schutzscheibe 14 angeordnet.

Gemäß der Ausführungsform nach **Fig. 21** **d**) liegt das Substrat bzw. die Schutzscheibe 14 mit der Innenseite auf einem Flanschbereich 2115 des Scheibenrahmens 2110 auf. Zwischen dem Flanschbereich des Scheibenrahmens und dem Substrat bzw. der Schutzscheibe 14 ist eine Dichtung, insbesondere eine O-Ring Dichtung, angeordnet. Mindestens ein Transducer 10 ist auf der Innenseite IS des Substrats bzw. der Schutzscheibe 14 angeordnet.

**Fig. 21 e) bis f)** zeigen unterschiedliche Formen von Schutzscheiben 14 bzw. Substraten und bevorzugte Anordnungen von Transducern 10, um das Sichtfeld durch das Substrat bzw. die Schutzscheibe 14 nicht oder nur minimal zu beeinträchtigen.

Gemäß der Ausführungsform nach **Fig. 21 e)** weist das Substrat bzw. die Schutzscheibe 14 eine im Querschnitt im Wesentlichen ovale Form mit einer abgeflachten Stirnseite auf. Der mindestens eine Transducer 10 ist auf der Innenseite des Substrats bzw. der Schutzscheibe 14 an der abgeflachten Stirnseite angeordnet.

Bei der Ausführungsform des Substrats bzw. der Schutzscheibe 14 nach **Fig. 21 f)** weist das Substrat bzw. die Schutzscheibe 14 eine im Querschnitt tropfenförmige Gestalt auf. Der mindestens eine Transducer 10 ist an dem spitzen Ende des tropfenförmig ausgestalteten Substrats bzw. der tropfenförmig ausgestalteten Schutzscheibe 14 in einem Anlageflansch 2140, der sich im Wesentlichen parallel zu einer langen Achse des Substrat bzw. der Schutzscheibe 14 erstreckt, angeordnet.

Gemäß der Ausführungsform nach **Fig. 21 g)** ist das Substrat bzw. die Schutzscheibe 14 im Querschnitt halbkreisförmig ausgestaltet und weist einen Anlageflansch auf, an dessen Innenseite IS der mindestens eine Transducer 10 angeordnet ist.

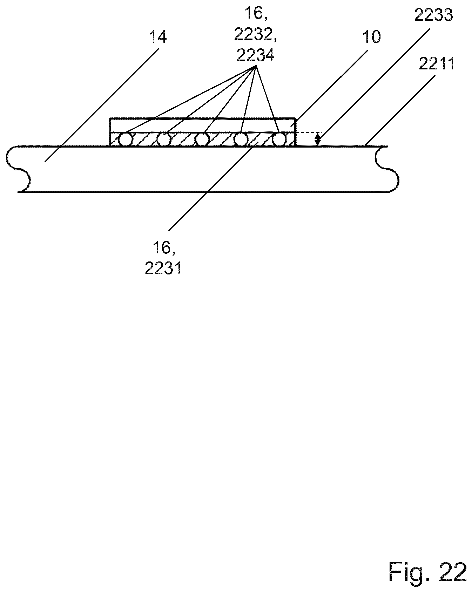

**Fig. 22** zeigt eine schematische Schnittansicht der des Substrats bzw. der Schutzscheibe 14 mit einem darauf angeordneten Transducer 10 in einer weiteren Ausführungsform. Der Transducer 10 ist auf einer Oberfläche 2211 des Substrats bzw. der Schutzscheibe 14 angeordnet. Zwischen dem Substrat 14 und dem Transducer 10 liegt eine Verbindungsschicht bzw. ein Glaskleber 16, die oder der ein Verbindungsmaterial 2231 und ein Füllmaterial 2232 aufweist.

In dieser Ausführungsform liegt das Füllmaterial 2232 in Form von als Kugeln oder Zylindern ausgebildeten Formkörpern 2234 in dem Verbindungsmaterial 2231 ein. Die Formkörper 2234 bilden eine Matrix für das Verbindungsmaterial 2231, sodass die Verbindungsschicht bzw. der Glaskleber 16 dementsprechend aus zwei Komponenten aufgebaut ist. Die Mächtigkeit der Verbindungsschicht bzw. des Glaskleber 16 wird durch den durch die Formkörper 2234 vorgegebenen Abstand 2233 definiert. Die Formkörper 2234 liegen sowohl unmittelbar an dem Transducer 10 als auch unmittelbar an dem Substrat bzw. der Schutzscheibe 14 an und bilden eine akustische Brücke.

Alle beschriebenen Kamerasysteme sind insbesondere für die Einbindung in ein Steuerungssystem eines Kraftfahrzeuges zum autonomen Fahren geeignet, wobei sich durch die zielgerichtete Reinigung des Sichtfeldes der Kamera eine besonders hohe Signalgüte auch unter widrigen Umgebungsbedingungen erreichen lässt.

Die Erfindung ist aber nicht auf eine der vorbeschriebenen Ausführungsformen beschränkt, sondern in vielfältiger Weise abwandelbar. Zum Beispiel können die Kamerasysteme auch unabhängig von einer bereits vorhandenen Schutzscheibe ausgebildet sein. Neben der Heckscheibe und Seitenscheiben eines Fahrzeuges sind auch Kamerasysteme mit eigenen Schutzscheiben möglich, die in separaten Gehäusen am Fahrzeug angeordnet oder in ein anderes Fahrzeugbauteil, z.B. den Rückspiegel, integriert sind. Besonders bevorzugt ist eine kuppelartige Ausbildung der Schutzscheibe auf dem Fahrzeugdach, um eine gute Rundumsicht zu erhalten.

So ist die Erfindung insbesondere nicht auf Kameras für das autonome Fahren von Kraftfahrzeugen beschränkt, sondern kann auch bei Luft- oder Wasserfahrzeugen zu Steuerungs- oder Beobachtungszwecken eingesetzt werden.

Auch kann ein erfindungsgemäßes optisches Überwachungs- oder Kamerasystem stationär ausgebildet sein und ist insbesondere dort von Vorteil, wo es aufgrund der Umgebungsbedingungen zu Niederschlag auf der Schutzscheibe kommen kann. Als Anwendungsfälle können als Beispiele Webcams, Überwaschungskameras im öffentlichen Raum, Wildbeobachtungskameras oder Überwachungskameras in Arbeitsräumen, wie z.B. von Werkzeugmaschinen genannt werden. Neben den Kameraanwendungen können erfindungsgemäße Ausführungsformen aber auch andere optische Überwachungsvorrichtungen aufweisen, wie z.B. Laserscanner oder die im militärischen Bereich oft eingesetzten Winkelspiegel.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

**Bezugszeichenliste**

| | | | |
|---|---|---|---|
| 1, 100, 200, 300 | Kamerasystem | 1621, 1622, 1810 | Ultraschallwelle |
| 10, 10 a-j, 1611, 1612, 1711, 1712, 1713, 1714, 1715, 1716, 1717, 1718 | Ultraschall-Transducer | 1631, 1731, 1732, 1733, 1734, | stehende Welle |
| | | 1641, 1741, 1742, 1743, 1744 | Transducergruppe |
| 12, 112 | Zusatzschutzscheibe | 1910, 1911 | Ansteuerungsschaltkreis |
| 14, 114, 214, 314 | Schutzscheibe | 1920 | Signal |
| 16, 116 | Glaskleber, Verbindungsschicht | 1925 1928 | Summierer Summensignal |
| 18, 118, 218, 318 | äußere Glaslage | 1930 | Verstärker |
| 19, 119 | Hohlraum | 1940 | Filter |
| 20 | Absenkung | 2000 | Temperaturmanagementsystem |
| 22, 122, 222, 322 | Laminatlage | | |
| 24, 124, 224, 324 | innere Glaslage | 2010 | Schaltkreisunterbrecher |
| 1110 | erste Elektrodengruppe | 2011 | Temperatursensor |
| | | 2020 | Steuerungseinheit |
| 1111 | erste Elektrode | 2040 | Signalausgang |
| 1120 | zweite Elektrodengruppe | 2045 | Steuersignal |
| | | 2110 | Scheibenrahmen |
| 1121 | zweite Elektrode | 2115 | Flanschbereich |
| 1130 | erster Bereich | 2120 | Dichtung |
| 1140 | zweiter Bereich | 2130 | Anlagebereich |
| 1410, 1420 | Rand | 2140 | Anlageflansch |
| 1430 | Randabstand | 2211 | Oberfläche |
| 1510 | Zwischenraum | 2231 | Verbindungsmaterial |
| 1520 | Mächtigkeitsaussparung | 2232 | Füllmaterial |
| | | 2233 | Abstand |
| 1530 | weitere Scheibe | 2234 | Formkörper |
| | | IS | Innenseite |

## Patentansprüche

1. Optisches Überwachungssystem zur Umgebungsüberwachung mit einer optischen Überwachungsvorrichtung, deren Sicht- oder Scanfeld durch eine Linse erfasst ist, und einer Schutzscheibe (12; 14; 114, 214; 314; 112; 218; 318), die die Linse vor Niederschlag schützt und wenigstens das Sicht- oder Scanfeld der Überwachungsvorrichtung abdeckt, wobei die Schutzscheibe (12; 14; 114, 214; 314; 112; 218; 318) ein Substrat für wenigstens einen Ultraschall-Transducer (10; 10 a-j; 1611; 1612; 1711 - 1718) bildet und mit diesem akustisch gekoppelt ist, wobei ein Randabstand (1430) des mindestens einen Ultraschall-Transducers (10; 10 a-j; 1611; 1612; 1711 - 1718) einem Bruchteil oder Vielfachen der Wellenlänge der durch den wenigstens einen Ultraschall-Transducer (10; 10 a-j; 1611; 1612; 1711 - 1718) erzeugten Oberflächenwellen entspricht, **dadurch gekennzeichnet, dass** zwischen den von dem Ultraschall-Transducer (10; 10 a-j; 1611; 1612; 1711 - 1718) ausgesendeten und den am Rand des Substrats reflektierten Oberflächenwellen konstruktive Interferenz auftritt.

2. Optisches Überwachungssystem nach einem der vorhergehenden Ansprüche, **dadurch gekennzeichnet, dass** der wenigstens eine Ultraschall-Transducer (10; 10 a-j; 1611; 1612; 1711 - 1718) in einem Zwischenraum (1510) zwischen zwei Substraten oder innerhalb eines Substrats angeordnet ist.

3. Optisches Überwachungssystem nach Anspruch 2, **dadurch gekennzeichnet, dass** der wenigstens eine Ultraschall-Transducer (10; 10 a-j; 1611; 1612; 1711 - 1718) innerhalb einer Schicht eines mehrlagigen Substrats angeordnet ist.

4. Optisches Überwachungssystem nach einem der vorhergehenden Ansprüche, **dadurch gekennzeichnet, dass** wenigstens zwei Ultraschall-Transducer (10; 10 a-j; 1611; 1612; 1711 - 1718) zu jeweils wenigstens einer Transducergruppe (1641; 1741; 1742) gruppiert sind.

5. Optisches Überwachungssystem nach Anspruch 4, **dadurch gekennzeichnet, dass** die Ultraschall-Transducer (10; 10 a-j; 1611; 1612; 1711 - 1718) der wenigstens einen Transducergruppe (1641; 1741; 1742) miteinander korrespondieren, indem sie gemeinsam angesteuert sind und/oder in einer korrespondierenden Geometrie, etwa beabstandet, aber im Wesentlichen zentriert zueinander ausgerichtet sind.

6. Optisches Überwachungssystem nach einem der vorhergehenden Ansprüche, **dadurch gekennzeichnet, dass** der wenigstens eine Ultraschall-Transducer (10; 10 a-j; 1611; 1612; 1711 - 1718) mindestens eine Elektrodengruppe (1110, 1120) mit jeweils mindestens einer Elektrode (1111, 1121) aufweist.

7. Optisches Überwachungssystem nach Anspruch 6, **dadurch gekennzeichnet, dass** der wenigstens eine Ultraschall-Transducer (10; 10 a-j; 1611; 1612; 1711 - 1718) auf einer dem Substrat bzw. der Schutzscheibe zugewandten Seite mindestens eine Elektrode (1111, 1121) aufweist.

8. Optisches Überwachungssystem nach einem der Ansprüche 6 bis 7, **dadurch gekennzeichnet, dass** der wenigstens eine Ultraschall-Transducer (10; 10 a-j; 1611; 1612; 1711 - 1718) eine erste Elektrodengruppe (1110) und eine zweite Elektrodengruppe (1120) aufweist, wobei die erste Elektrodengruppe (1110) mindestens zwei Elektroden mit einem ersten Abstand und die zweite Elektrodengruppe (1120) mindestens zwei Elektroden mit einem zweiten Abstand aufweist.

9. Optisches Überwachungssystem nach einem der Ansprüche 6 bis 8, **dadurch gekennzeichnet, dass** die Elektroden (1111, 1121) als erhabene Ausformungen eines Transducermaterials ausgebildet sind.

10. Optisches Überwachungssystem nach einem der Ansprüche 6 bis 9, **dadurch gekennzeichnet, dass** die erste Elektrodengruppe (1110) mit der zweiten Elektrodengruppe (1120) kammartig verzahnt ist.

11. Optisches Überwachungssystem nach einem der Ansprüche 6 bis 9, **dadurch gekennzeichnet, dass** die erste Elektrodengruppe (1110) in einem ersten Bereich des wenigstens einen Ultraschall-Transducers (10; 10 a-j; 1611; 1612; 1711 - 1718) angeordnet ist und, dass die zweite Elektrodengruppe (1120) in einem zweiten Bereich des wenigstens einen Ultraschall-Transducers (10; 10 a-j; 1611; 1612; 1711 - 1718) angeordnet ist.

12. Optisches Überwachungssystem nach einem der vorhergehenden Ansprüche, **dadurch gekennzeichnet, dass** der wenigstens eine Ultraschall-Transducer (10; 10 a-j; 1611; 1612; 1711 - 1718) eine L-Form oder eine U-Form aufweist.

13. Optisches Überwachungssystem nach einem der vorhergehenden Ansprüche, **dadurch gekennzeichnet, dass** das optische Überwachungssystem als Kamera, Laserscanner oder sonstige Überwachungsoptik ausgebildet ist.

## Claims

1. An optical monitoring system for monitoring the surroundings, comprising an optical monitoring device, the field of view or scanning of which is captured by a lens, and a protective screen (12; 14; 114, 214; 314; 112; 218; 318), which protects the lens from precipitation and covers at least the field of view or scanning of the monitoring device, wherein the protective screen (12; 14; 114, 214; 314; 112; 218; 318) forms a substrate for at least one ultrasonic transducer (10; 10 a-j; 1611; 1612; 1711 - 1718) and is acoustically coupled thereto, wherein an edge distance (1430) of the at least one ultrasonic transducer (10; 10 a-j; 1611; 1612; 1711 - 1718) corresponds to a fraction or multiple of the wavelength of the surface waves generated by the at least one ultrasonic transducer (10; 10 a-j; 1611; 1612; 1711 - 1718), **characterized in that** constructive interference occurs between the surface waves emitted by the ultrasonic transducer (10; 10 a-j; 1611; 1612; 1711 - 1718) and those reflected at the edge of the substrate.

2. The optical monitoring system according to any one of the preceding claims, **characterized in that** the at least one ultrasonic transducer (10; 10 a-j; 1611; 1612; 1711 - 1718) is arranged in an intermediate space (1510) between two substrates or within a substrate.

3. The optical monitoring system according to claim 2, **characterized in that** the at least one ultrasonic transducer (10; 10 a-j; 1611; 1612; 1711 - 1718) is arranged within a layer of a multilayer substrate.

4. The optical monitoring system according to any one of the preceding claims, **characterized in that** at least two ultrasonic transducers (10; 10 a-j; 1611; 1612; 1711 - 1718) are each grouped into at least one transducer group (1641; 1741; 1742).

5. The optical monitoring system according to claim 4, **characterized in that** the ultrasonic transducers (10; 10 a-j; 1611; 1612; 1711 - 1718) of the at least one transducer group (1641; 1741; 1742) correspond to one another **in that** they are controlled jointly and/or are aligned in a corresponding geometry, approximately spaced apart, but substantially centered with respect to one another.

6. The optical monitoring system according to any one of the preceding claims, **characterized in that** the at least one ultrasonic transducer (10; 10 a-j; 1611; 1612; 1711 - 1718) has at least one electrode group (1110, 1120) with in each case at least one electrode (1111, 1121).

7. The optical monitoring system according to claim 6, **characterized in that** the at least one ultrasonic transducer (10; 10 a-j; 1611; 1612; 1711 - 1718) has at least one electrode (1111, 1121) on a side facing the substrate or the protective screen.

8. The optical monitoring system according to any one of claims 6 to 7, **characterized in that** the at least one ultrasonic transducer (10; 10 a-j; 1611; 1612; 1711 - 1718) has a first electrode group (1110) and a second electrode group (1120), wherein the first electrode group (1110) has at least two electrodes with a first spacing and the second electrode group (1120) has at least two electrodes with a second spacing.

9. The optical monitoring system according to any one of claims 6 to 8, **characterized in that** the electrodes (1111, 1121) are formed as raised formations of a transducer material.

10. The optical monitoring system according to any one of claims 6 to 9, **characterized in that** the first electrode group (1110) is intermeshed in a comb-like manner with the second electrode group (1120).

11. The optical monitoring system according to any one of claims 6 to 9, **characterized in that** the first electrode group (1110) is arranged in a first region of the at least one ultrasonic transducer (10; 10 a-j; 1611; 1612; 1711 - 1718) and **in that** the second electrode group (1120) is arranged in a second region of the at least one ultrasonic transducer (10; 10 a-j; 1611; 1612; 1711 - 1718).

12. The optical monitoring system according to any one of the preceding claims, **characterized in that** the at least one ultrasonic transducer (10; 10 a-j; 1611; 1612; 1711 - 1718) has an L-shape or a U-shape.

13. The optical monitoring system according to any one of the preceding claims, **characterized in that** the optical monitoring system is formed as a camera, laser scanner or other monitoring optics.

## Revendications

1. Système de surveillance optique pour la surveillance de l'environnement avec un dispositif de surveillance optique dont le champ de vision ou de balayage est couvert par une lentille, et une vitre de protection (12 ; 14 ; 114, 214 ; 314 ; 112 ; 218 ; 318) qui protège la lentille des précipitations et recouvre au moins le champ de vision ou de balayage du dispositif de surveillance, la vitre de protection (12 ; 14 ; 114, 214 ; 314 ; 112 ; 218 ; 318) formant un substrat pour au moins un transducteur ultrasonore (10 ; 10 a-j ; 1611 ; 1612 ; 1711-1718) et est couplé acoustiquement à celui-ci, une distance de bord (1430) dudit au moins un transducteur ultrasonore (10 ; 10 a-j ; 1611 ; 1612 ; 1711-1718) correspondant à une fraction ou à un multiple de la longueur d'onde de la lumière transmise par ledit au moins un transducteur ultrasonore (10; 10 a-j; 1611; 1612; 1711-1718), **caractérisé en ce qu'**il se produit une interférence constructive entre les ondes de surface émises par le transducteur ultrasonore (10; 10 a-j; 1611; 1612; 1711-1718) et les ondes de surface réfléchies sur le bord du substrat.

2. Système de surveillance optique selon l'une des revendications précédentes, **caractérisé en ce que** ledit au moins un transducteur ultrasonore (10; 10 a-j; 1611 ; 1612; 1711-1718) est disposé dans un espace (1510) entre deux substrats ou à l'intérieur d'un substrat.

3. Système de surveillance optique selon la revendication 2, **caractérisé en ce que** ledit au moins un transducteur ultrasonore (10 ; 10 a-j ; 1611 ; 1612 ; 1711-1718) est disposé à l'intérieur d'une couche d'un substrat multicouche.

4. Système de surveillance optique selon l'une des revendications précédentes, **caractérisé en ce qu'**au moins deux transducteurs ultrasonores (10; 10 a-j; 1611; 1612 ; 1711 - 1718) sont associés chacun à au moins une groupe de transducteurs (1641; 1741; 1742).

5. Système de surveillance optique selon la revendication 4, **caractérisé en ce que** les transducteurs ultrasonores (10; 10 a-j; 1611; 1612; 1711 - 1718) de la au moins un groupe de transducteurs (1641 ; 1741 ; 1742) correspondent l'un à l'autre en étant commandés ensemble et/ou en étant orientés dans une géométrie correspondante, à peu près espacés, mais sensiblement centrés l'un par rapport à l'autre.

6. Système de surveillance optique selon l'une quelconque des revendications précédentes, **caractérisé en ce que** ledit au moins un transducteur ultrasonore (10; 10 a-j; 1611 ; 1612 ; 1711 - 1718) comprend au moins un groupe d'électrodes (1110, 1120) ayant chacun au moins une électrode (1111, 1121).

7. Système de surveillance optique selon la revendication 6, **caractérisé en ce que** le au moins un transducteur ultrasonore (10 ; 10 a-j ; 1611 ; 1612 ; 1711 - 1718) présente au moins une électrode (1111, 1121) sur un côté tourné vers le substrat ou la vitre de protection.

8. Système de surveillance optique selon l'une quelconque des revendications 6 à 7, **caractérisé en ce que** ledit au moins un transducteur ultrasonore (10; 10 a-j; 1611 ; 1612 ; 1711-1718) comprend un premier groupe d'électrodes (1110) et un second groupe d'électrodes (1120), ledit premier groupe d'électrodes (1110) comprenant au moins deux électrodes ayant un premier espacement et ledit second groupe d'électrodes (1120) comprenant au moins deux électrodes ayant un second espacement.

9. Système de surveillance optique selon l'une quelconque des revendications 6 à 8, **caractérisé en ce que** les électrodes (1111, 1121) sont réalisées sous la forme de formations en relief d'un matériau transducteur.

10. Système de surveillance optique selon l'une des revendications 6 à 9, **caractérisé en ce que** le premier groupe d'électrodes (1110) est denté avec le deuxième groupe d'électrodes (1120) à la manière d'un peigne.

11. Système de surveillance optique selon l'une quelconque des revendications 6 à 9, **caractérisé en ce que** le premier groupe d'électrodes (1110) est situé dans une première région dudit au moins un transducteur ultrasonore (10; 10 a-j; 1611;1612; 1711 - 1718) et **en ce que** le deuxième groupe d'électrodes (1120) est disposé dans une deuxième région du au moins un transducteur ultrasonore (10; 10a-j; 1611; 1612; 1711 - 1718).

12. Système de surveillance optique selon l'une quelconque des revendications précédentes, **caractérisé en ce que** ledit au moins un transducteur ultrasonore (10 ; 10 a-j ; 1611 ; 1612 ; 1711-1718) présente une forme en L ou une forme en U.

13. Système de surveillance optique selon l'une des revendications précédentes, **caractérisé en ce que** le système de surveillance optique est conçu comme une caméra, un scanner laser ou un autre système optique de surveillance.
